(19) Europäisches Patentamt / European Patent Office / Office européen des brevets

(11) **EP 2 770 785 B1**

(12) **EUROPEAN PATENT SPECIFICATION**

(45) Date of publication and mention of the grant of the patent:
**29.06.2016 Bulletin 2016/26**

(21) Application number: **12843745.6**

(22) Date of filing: **20.12.2012**

(51) Int Cl.:
*H04W 52/24* (2009.01)     *H04W 52/14* (2009.01)
*H04W 52/58* (2009.01)     *H04W 52/28* (2009.01)

(86) International application number:
**PCT/CN2012/087051**

(87) International publication number:
**WO 2013/060306 (02.05.2013 Gazette 2013/18)**

(54) **METHOD, USER EQUIPMENT, AND ACCESS POINT FOR UPLINK POWER CONTROL**

VERFAHREN, BENUTZERVORRICHTUNG UND ZUGRIFFSPUNKT ZUR UPLINK-LEISTUNGSSTEUERUNG

PROCÉDÉ, ÉQUIPEMENT UTILISATEUR, ET POINT D'ACCÈS POUR COMMANDE DE PUISSANCE DE LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.08.2014 Bulletin 2014/35**

(73) Proprietor: **Huawei Technologies Co., Ltd.**
**Longgang District**
**Shenzhen, Guangdong 518129 (CN)**

(72) Inventors:
• **LIU, Kunpeng**
**Shenzhen**
**Guangdong 518129 (CN)**
• **LIU, Jianghua**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
WO-A1-2011/100672     WO-A2-2010/035966
WO-A2-2010/129610     CN-A- 101 527 586

• LG ELECTRONICS ET AL.: 'Uplink Power Control for CoMP' 3GPP TSG RAN WG1 MEETING #66BIS, R1-113281, [Online] 10 October 2011 - 14 October 2011, XP050538387 Retrieved from the Internet: <URL:http://www.3gpp.org/ftp/tsg_ran/WG1_RL 1/TSGR1_66b/Docs/>
• PANTECH: 'Uplink Power Control Enhancement in New Deployment Scenarios' 3GPPTSG RAN WG1 MEETING #66BIS, R1-113111, [Online] 04 October 2011, XP050538253 Retrieved from the Internet: <URL:http://www.3gpp.org/ftp/tsg_ran/WG1_RL 1/TSGR1_66b/Docs/>
• INTERDIGITAL COMMUNICATIONS ET AL.: 'CSI Feedback for Non-Uniform Networks' 3GPP TSG RAN WG1 MEETING #66, R1-112240, [Online] 22 August 2011, XP050537401 Retrieved from the Internet: <URL:http://www.3gpp.org/ftp/tsg_ran/WG1_RL 1/TSGR1_66/Docs/>
• '3rd Generation Partnership Project; Technical Specification Group Radio Access Network; Evolved Universal Terrestrial Radio Access (E-UTRA); Physical layer procedures; (Release 10)' 3GPP TS 36.213 V10.3.0, [Online] 25 September 2011, XP003031609 Retrieved from the Internet: <URL:http://www.3gpp.org/ftp/Specs/archive/ 36_series/36.213/>

EP 2 770 785 B1

**(Cont. next page)**

- **RENESAS MOBILE ET AL.: 'Uplink enhancements for new deployment scenarios' 3GPP TSG RAN WG1 MEETING #66, R1-112320, [Online] 22 August 2011 - 26 August 2011, XP050537458 Retrieved from the Internet: <URL:http://www.3gpp.org/ftp/tsg_ran/WG1_RL 1/TSGR1_66/Docs/>**

Remarks:

The filing date of the international application is within two months from the date of expiration of the priority period (R. 26bis.3 PCT).

**Description**

**Field of the Invention**

The embodiments of the present invention relate to communication technologies, in particular to a method, user equipment and access point for uplink power control.

**Background of the Invention**

The 3rd Generation Partnership Project (3rd Generation Partnership Project, 3GPP) defines four Coordinated Multi-Point (Coordinated Multi-Point, CoMP) transmission scenarios, wherein the fourth scenario shows that a Macro Site (Macro Site) and a Radio Remote Head (Radio Remote Head, RRH) in the control range thereof share the same Cell Identity (Cell Identity), and this architecture is also called a Distributed Antenna System (Distributed Antenna System, DAS).

In the DAS system, uplink power control is generally employed for a User Equipment (User Equipment, UE) in order that the receiving powers of signals transmitted by different UEs are roughly on the same level when the signals arrive at a base station to avoid inter-user interference caused by a near-far effect. In Long Term Evolution (LTE, Long Term Evolution) R-10 standard, when the uplink power is controlled, transmission powers of a Physical Uplink Shared Channel (Physical Uplink Shared Channel, PUSCH), Physical Uplink Control Channel (Physical Uplink Control Channel, PUCCH) and Sounding Reference Signals (Sounding Reference Signal, SRS) is determined by path loss (PL, Path Loss) estimated on the UE side, namely, the transmission power of uplink signals is compensated by using the path loss estimated on the UE side.

For uplink power control for SRS, there is a scenario as follow: the Macro Site is used for downlink transmission for the UE, while the RRH2 is used for receiving uplink transmission of the UE, and the corresponding path loss measured on the UE side is PL2. In the prior art, the UE performs path loss compensation on the transmission power of uplink PUSCH data according to the PL2, and performs path loss compensation on the transmission power of an uplink SRS according to the PL2 likewise, namely, the path loss compensation of the SRS is the same as that of the PUSCH.

Patent document (WO 2010/129610 A2) discloses closed loop and open loop power control techniques for each antenna of a user equipment (UE). In this document, the access point calculates the power adjustment values for all the antennas of the UE, and transmits the power adjustment values to the UE. The UE calculates the transmission power for the different antennas and transmits signals to an access point (AP) from the antennas with the corresponding powers. For example, the UE transmits a signal from an antenna with low power and transmit another signal from another antenna with high power. The UE adjusts its transmission power for the antenna based on the value of the power adjustment parameter $\delta\tau$ for each antenna.

3GPP document (3GPP TSG RAN WG1 MEETING #66BIS, R1-113281) discloses that uplink power control for CoMP. An issue discussed is how to handle the power gap between different UL signals targeting different reception points. For example, in case that a DL transmission point is different from a UL reception point in a TDD system, and the DL transmission point obtains DL CSI information via the SRS transmitted from UE, the SRS targeting DL transmission points will require different power level from PUSCH transmission power. In case that SRS targeting DL transmission points and PUSCH are transmitted in one UL sub-frame, SRS power offset parameter in SRS power control formula can be exploited as a method for setting power of SRS targeting DL transmission points different from PUSCH transmission power. However, this method is insufficient to completely resolve the issue. Another way to resolve the issue is to separate the power control for each UL signal by newly defined configuration message, including using different RS for the pathloss measurement in the power control formulae for different UL signals.

3GPP document (3GPPTSG RAN WG1 MEETING #66BIS, R1-113111) discloses an uplink power control enhancement in new deployment scenarios. Specifically, this document discusses the necessity of change at path-loss measurement in heterogeneous network CoMP. In addition ,this document discusses the utility of reference signals such as CSI-RS and CRS for path-loss measurement with their consideration points.

However, for a system supporting a time division duplex (TDD), the Macro Site also needs to measure quality information of an uplink channel by using the uplink SRS, and to acquire quality information of a downlink channel by using channel reciprocity; and if the uplink power control of an SRS is performed purely according to the distance between a UE and an RRH, the signal quality of SRS received by the base station is then low, and therefore the SRS is difficult to be accurately detected, leading to the low precision of channel measurement.

**Summary of the Invention**

A method, user equipment and access point for uplink power control is provided in the embodiments of the present invention, which may improve the precision of information channel measurement.

In one aspect, a method for uplink power control is provided, including: performing, by a user equipment, power control on different uplink signals by employing different uplink power control mechanisms respectively to determine respective transmission powers of the different uplink signals, wherein the different uplink power control mechanisms means that at least one parameter in each uplink power control formula is independently set; and transmitting, by the user equipment, the different uplink signals by using the determined transmission powers, respectively, wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises a closed-loop power adjustment amount, target receiving power of a Physical Uplink Shared Channel, or a path loss compensation factor, and the closed-loop power adjustment amount, the target receiving power of a Physical Uplink Shared Channel, or the path loss compensation factor is independently configured by an access point.

In another aspect, a method for uplink power control is provided, including: generating, by an access point, a configuration of at least one downlink pilot signal; and transmitting, by the access point, the configuration of the at least one downlink pilot signal to user equipment, so that the user equipment performs power control on different uplink signals by employing different uplink power control mechanisms respectively, wherein the different uplink power control mechanisms means that at least one parameter in each uplink power control formula is independently set, wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises a closed-loop power adjustment amount, target receiving power of a Physical Uplink Shared Channel, or a path loss compensation factor, and the closed-loop power adjustment amount, the target receiving power of a Physical Uplink Shared Channel, or the path loss compensation factor is independently configured by the access point.

In yet another aspect, a user equipment is provided, including: a power control module, used for performing power control on different uplink signals by employing different uplink power control mechanisms respectively to determine the respective transmission powers of the different uplink signals, wherein the different uplink power control mechanisms means that at least one parameter in each uplink power control formula is independently set; and a transmitting module, used for transmitting the different uplink signals by using the determined transmission power respectively, wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises a closed-loop power adjustment amount, target receiving power of a Physical Uplink Shared Channel, or a path loss compensation factor, and the closed-loop power adjustment amount, the target receiving power of a Physical Uplink Shared Channel, or the path loss compensation factor is independently configured by an access point.

In still another aspect, an access point is provided, including: a configuration module, used for generating a configuration of at least one downlink pilot signal; and a transmitting module, used for transmitting the configuration of the at least one downlink pilot signal to a user equipment, so that the user equipment performs power control on different uplink signals by employing different uplink power control mechanisms respectively, wherein the different uplink power control mechanisms means that at least one parameter in each uplink power control formula is independently set; a setting module (830), used for independently setting a closed-loop power adjustment amount, target receiving power of a Physical Uplink Shared Channel, or a path loss compensation factor for at least one of the different uplink power control mechanisms, for at least one of the different uplink signals, wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises the closed-loop power adjustment amount, the target receiving power of a Physical Uplink Shared Channel, or the path loss compensation factor.

According to the embodiments of the present invention, the corresponding uplink power control mechanisms may be employed for the different uplink signals to transmit the different uplink signals in appropriate transmission powers, thus improving precision of channel measurement performed by different access points through the corresponding uplink signals.

### Brief Description of the Drawings

In order to illustrate the technical solution in the embodiments of the present invention more clearly, brief description will be made below to the drawings required in the embodiments or the prior art, and apparently, the drawings described below are some embodiments of the present invention only, and other drawings could be obtained based on these drawings by those of ordinary skill in the art without creative efforts.

Fig. 1 shows an architecture diagram of a CoMP transmission system according to an embodiment of the present invention.

Fig. 2 shows a schematic flowchart of a method for uplink power control according to an embodiment of the present invention.

Fig. 3 shows a schematic flowchart of a method for uplink power control according to another embodiment of the present invention.

Fig. 4 shows a schematic flowchart of an uplink power control process according to an embodiment of the present invention.

Fig. 5 shows a schematic view of a configuration of uplink pilot signals according to an embodiment of the present invention.

Fig. 6 shows a schematic view of a configuration of uplink pilot signals according to another embodiment of the present invention.

Fig. 7 is a structural schematic view of user equipment in an embodiment of the present invention.

Fig. 8 is a structural schematic view of an access point in another embodiment of the present invention.

## Detailed Description of the Embodiments

The technical solution in the embodiments of the present invention will be described clearly and fully below in conjunction with the drawings in the embodiments of the present invention, and apparently, the embodiments described are only part of embodiments of the present invention instead of all of them. All the other embodiments obtained by those of ordinary skill in the art without creative efforts based on the embodiments in the present invention, shall fall within the protection scope of the present invention.

The technical solution of the present invention may be applied to various communication systems, such as Global System for Mobile Communications (GSM), Code Division Multiple Access (CDMA, Code Division Multiple Access) system, Wideband Code Division Multiple Access Wireless (WCDMA, Wideband Code Division Multiple Access Wireless), General Packet Radio Service (GPRS, General Packet Radio Service), Long Term Evolution (LTE, Long Term Evolution) and the like.

A user equipment (UE, User Equipment) may also be referred to as a mobile terminal, a mobile user equipment and the like, and may communicate with one or more core networks through a Radio Access Network (RAN, Radio Access Network); and the user equipment may be a mobile terminal, such as a mobile phone (or named as "cellular" phone) or a computer with a mobile terminal, which, for example, may be a portable, pocket, handheld, computer built-in or vehicle-mounted mobile device, which exchanges languages and/or data with the Radio Access Network.

A base station may be a base transceiver station (BTS, Base Transceiver Station) in GSM or CDMA, a NodeB in WCDMA or an evolutional Node B (eNB or e-NodeB, evolutional Node B) in LTE, and is not limited in the present invention, for example, the base station may also be an RRH in a distributed antenna system (DAS), a relay station in a relay network or a micro base station in a heterogeneous network. For convenient description, the eNode B and the RRH are taken as examples to illustrate the embodiments below.

In a DAS, the path loss may be measured by using a Common Reference Signal (CRS, Common Reference Signal), and the formula of the path loss may be PL=ReferenceSignalPower-RSRP, wherein ReferenceSignalPower is reference signal power defined by a base station and is acquired by a UE through a cell specific (cell specific) high-layer signaling, and the RSRP is a Reference Signal Receiving Power (Reference Signal Receiving Power) measured by the UE at CRS port Port0 or measured at ports Port0 and Port1 jointly.

In addition, the path loss may also be measured by using a Channel State Indication Reference Signal (CSI-RS, Channel State Indication Reference Signal), and unlike the CRS, the CSI-RS may be used for a specific base station, and thus the path loss may be measured for a target base station of uplink transmission. For example, the UE may receive configuration information of the CSI-RS from the base station, and may measure the path loss for uplink power control based on the configuration information of the CSI-RS. Because the CSI-RS may be used for the specific base station, the CSI-RS configuration information transmitted by the base station may include corresponding antenna port information of a target access point (such as an RRH) of uplink transmission to indicate an antenna port to be measured. Different RRHs may configure CSI-RSs of different antenna ports, for example, RRH1 may configure CSI-RSs of two antenna ports, and RRH2 may configure CSI-RSs of eight antenna ports. The UE may determine an antenna port for measurement based on reference signal port information, measure the RSRP of the CSI-RS on the determined antenna port, and determine the path loss according to the measured RSRP and reference signal power information. For example, the CSI-RSs of the two antenna ports have reference signal powers: Pd1 and Pd2, and the formulae of path loss may be PL$_1$=Pd1-RSRP1 and PL$_2$=Pd2-RSRP2.

When uplink power control is performed on an uplink pilot signal, a transmission power of the uplink pilot signal may be calculated by using calculation formula for uplink power control, for example, the calculation formula for uplink power control of an SRS is as follow:

$$P_{\text{SRS,c}}(i) = \min\left\{ P_{\text{CMAX,c}}(i), P_{\text{SRS\_OFFSET,c}}(m) + 10\log_{10}(M_{\text{SRS,c}}) + P_{\text{O\_PUSCH,c}}(j) + \alpha_c(j)\cdot PL_c + f_c(i) \right\}$$

$$(1)$$

wherein, m expresses the type of the SRS, for example, if m is 0, the SRS is a cyclic SRS, and if m is 1, the SRS is an acyclic SRS; i expresses the number of a subframe of a carrier c. $P_{\text{SRS,c}}(i)$ expresses the transmission power of the SRS in subframe i. $P_{\text{CMAX,c}}(i)$ expresses the allowable maximum transmission power of a UE. $P_{\text{SRS\_OFFSET,c}}(m)$ expresses the power offset of the SRS relative to PUSCH data. $M_{\text{SRS,c}}$ expresses the transmission bandwidth of the SRS in subframe i. $P_{\text{O\_PUSCH,c}}(j)$ is the target receiving power of a PUSCH. $\alpha_c(j)$ is a path loss compensation factor. $PL_c$ is the path loss of downlink transmission measured by the UE, and $f_c(i)$ is the closed-loop power adjustment amount of the PUSCH.

In the DAS, $PL_c$ in formula (1) is the same as the path loss in the power control calculation formula of the PUSCH. In other words, if a certain RRH is selected as an uplink access point , power control is performed on the uplink transmission power of the PUSCH in a manner that a target access point is the RRH, and therefore uplink power control is also performed on the SRS in a manner that the target access point is the RRH. Because the distance between the UE and the eNode B is generally greater than the distance between the UE and the RRH, it is possible that the precision that the base station measures the SRS is low.

It can be seen that it is an issue in the DAS how uplink power control is performed on an SRS to ensure the measurement precision of an uplink channel and a downlink channel at the same time.

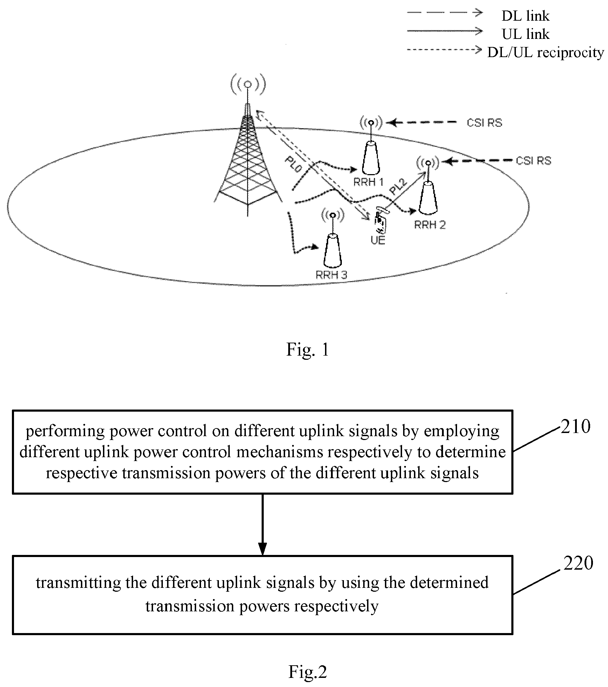

Fig. 1 shows an architecture diagram of a CoMP transmission system according to an embodiment of the present invention.

As shown in Fig. 1, a macro base station is used for downlink transmission of a UE, for example, the corresponding path loss measured on the UE side is PL0, RRH2 is used for receiving uplink transmission of the UE, and the corresponding path loss measured on the UE side is PL2. The downlink pilot signal used when the uplink transmission path loss PL2 for the RRH2 is measured on the UE side is CSI-RS.

It shall be noted that, the embodiment according to the present invention may also be applied to other system architectures, for example, a relay network consisting of a macro base station and a relay station or a heterogeneous network consisting of a macro base station and a micro base station.

Fig. 2 shows a schematic flowchart of a method for uplink power control in an embodiment according to the present invention. The method in Fig. 2 may be performed by the UE in Fig. 1.

210, performing power control on different uplink signals by employing different uplink power control mechanisms respectively to determine respective transmission powers of the different uplink signals.

The different uplink signals may be uplink pilot signals, for example, the uplink pilot signals for different access points or the uplink pilot signals for different target access points, for example, an acyclic SRS with an eNode B as a target access point and a cyclic SRS with an RRH as a target access point, but the embodiments of the present invention are not limited thereto, and all of the different uplink pilot signals may be cyclic SRSs or acyclic SRSs. In addition, the uplink signals may be PUSCH.

For example, different uplink power control mechanisms may be the ones that employ different uplink power control formulae, or at least one parameter in each uplink power control formula is independently set, so that the transmission powers of the corresponding uplink signals may be compensated; or the different uplink power control mechanisms may means performing path loss compensation on the transmission power of the uplink signals based on configurations of different downlink pilot signals. Independently setting the parameter in the power control formula of a certain uplink signal means specially setting the parameter for the uplink signal to compensate the transmission power of the uplink signal.

For example, the UE may employ different uplink power control mechanisms when performing power control on different uplink signals after receiving an indication signaling from an access point. Alternatively, the UE may also employ different power control mechanisms for different uplink signals when the preset conditions appointed with the access point are satisfied. For example, upon receiving a request from an eNode B in a TDD system for transmitting an acyclic SRS, the UE may employ a power control mechanism different from the power control mechanism required by an RRH for a cyclic SRS when transmitting the acyclic SRS.

220, transmitting the different uplink signals by using the determined transmission powers respectively.

For example, the transmission power used when the UE transmits the acyclic SRS with the eNode B as a target access point is different from the transmission power used when the UE transmits the cyclic SRS with the RRH as a target access point, to meet the precision required by the eNode for performing channel measurement by using the uplink signals.

In the embodiment according to the present invention, corresponding uplink power control mechanisms may be employed for different uplink signals to transmit the different uplink signals with appropriate transmission powers, thus improving the precision of channel measurement performed by different access points through the corresponding uplink signals.

In the embodiment according to the present invention, in 210, the configuration of at least one downlink pilot signal is received, and the path losses of the different uplink signals are measured based on the configuration of the at least one downlink pilot signal respectively, and the transmission powers of the different uplink signals are compensated according to the measured path losses.

Alternatively, as another embodiment, in 210, the path losses of the different uplink signals are measured based on a configuration of a CRS and a configuration of a CSI-RS respectively.

For example, the UE may receive the configuration information of downlink pilot signals, configured by an access point, from the access point (such as an eNode B or an RRH), for example, receive the configuration information of a CRS and a CSI-RS from the eNode B, wherein the CRS is used for measuring the path loss of the acyclic SRS with the eNode B as the target access point to compensate the transmission power of the acyclic SRS, while the CSI-RS is used for measuring the path loss of the cyclic SRS with the RRH as the target access point to compensate the transmission power of the cyclic SRS.

Alternatively, as another embodiment, in 210, the path losses of the different uplink signals are measured based on a first configuration set of CSI-RSs and a second configuration set of CSI-RSs respectively, and the first configuration set of CSI-RSs and the second configuration set of CSI-RSs each include at least one CSI-RS pattern.

For example, the first configuration set of CSI-RSs and the second configuration set of CSI-RSs are used for measuring the path losses of the acyclic SRS with the eNode B as the target access point and the cyclic SRS with the RRH as the target access point respectively, and these configuration sets may be received from the eNode B or the RRH.

Alternatively, as another embodiment, in 210, the path losses of the different uplink signals are measured based on the same configuration set of CSI-RSs by using different functions respectively, and the functions are the ones of transmission power and RSRP of a CSI-RS in the configuration set of CSI-RSs.

For example, according to the functions, the UE may obtain multiple path losses based on each CSI-RS configuration in the configuration set of CSI-RSs, taking the maximum value of multiple path losses to perform path loss compensation under the first power control mechanism, and taking the minimum value of multiple path losses to perform path loss compensation under the second power control mechanism. The embodiments according to the present invention are not limited thereto, and other similar functions may also be employed.

In the embodiment according to the present invention, in 210, the power control formulae of the different uplink power control mechanisms are different in order to perform corresponding power compensation on the different uplink signals.

For example, the power control formulae are the ones used for calculating the transmission powers of the uplink signals, and generally include the following parameters: allowable maximal transmission power of the UE, power offset, transmission bandwidth of the uplink signals in a subframe, target receiving power, path loss compensation factor, closed-loop power adjustment amount, path loss and the like; and different power control formulae may employ different parameters, for example, a certain parameter is employed in a power control formula, yet the parameter is not employed in another power control formula.

Alternatively, as another embodiment, the power control formulae of the different uplink power control mechanisms are the same, and at least one parameter of the power control formulae of the different uplink power control mechanisms is independently configured, so that corresponding power compensation is performed on the different uplink signals.

In the embodiment according to the present invention, the at least one parameter in the power control formula includes a closed-loop power adjustment amount or a path loss compensation factor, wherein the closed-loop power adjustment amount or the path loss compensation factor is independently configured by the access point.

For example, the at least one parameter may be the path loss compensation factor, the closed-loop power adjustment amount or the like, and may be independently set by the access point. For example, the eNode B may independently set the path loss compensation factor or the closed-loop power adjustment amount for the acyclic SRS required to be used by the eNode B itself and transmit the path loss compensation factor or the closed-loop power adjustment amount to the UE through a specific signaling to appropriately compensate the transmission power of the acyclic SRS.

For example, the access point may independently configure at least one of the path loss compensation factor

and the closed-loop power adjustment amount for a certain uplink signal to compensate the uplink power of the uplink signal.

Alternatively, as another embodiment, the method in Fig. 2 further includes: receiving path loss reference linking information, wherein the path loss reference linking information is used for indicating a subset of downlink pilot signals for measuring the path losses of the different uplink signals in the configuration of the at least one downlink pilot signal, or used for jointly indicating the subset of the downlink pilot signals for measuring the path losses of the different uplink signals in the configuration of the at least one downlink pilot signal and a carrier on which it is.

For example, the path loss reference linking information may indicate, by using at least one bit, that a certain uplink signal may select which downlink pilot signal(s) to measure the path loss of the uplink signal. For example, the path loss reference linking information for a PUSCH may indicate which downlink pilot signals in the configuration set of the downlink pilot signals are used to measure the path loss of the PUSCH, and the path loss reference linking information for an SRS may indicate which downlink pilot signals in the configuration set of the downlink pilot signals are used to measure the path loss of the SRS.

For example, in the case that there are two carriers and two downlink pilot signals, the path loss reference linking information may indicate, by using two bits, which downlink pilot signal on which carrier is selected for measuring the path loss.

According to the embodiment of the present invention, when the path losses of the different uplink signals are measured by employing the configuration of the at least one downlink pilot signal, the filtering of the RSRP of the configuration of the at least one downlink pilot signal is independent.

According to the embodiment of the present invention, the different uplink signals are configured and transmitted by being configured in subframes of different groups, bands of different groups or sequences of different groups, or transmitted through different transmitting antenna ports.

For example, the uplink signals in the subframes of different groups, bands of different groups or sequences of different groups or the uplink signals transmitted by the different transmitting antenna ports employ different uplink power control mechanisms.

According to the embodiment of the present invention, the different uplink signals include different cyclic SRSs, or different acyclic SRSs, or cyclic SRSs and acyclic SRSs.

According to the embodiment of the present invention, a power offset in a power control formula of at least one of the different uplink signals is independently set by an access point, wherein power offsets of a cyclic SRS and an acyclic SRS employing a first power control mechanism are a first power offset and a second power offset respectively, and power offsets of a cyclic SRS and an acyclic SRS employing a second power control mechanism are a third power offset and a fourth power offset respectively. The third power offset and the fourth power offset may be the same or different, and value ranges of the third power offset and the fourth power offset are different from value ranges of the first power offset and the second power offset.

According to the embodiment of the present invention, the different uplink signals include a demodulation reference signal (DMRS) and an SRS.

For example, the different uplink signals may include a first SRS and a second SRS, wherein the DMRS may be used as the first SRS.

According to the embodiment of the present invention, the DMRS and the SRS are separately transmitted in different subframes, wherein the different subframes include or do not include data.

Alternatively, as another embodiment, the DMRS and the SRS are transmitted in the same subframe, wherein the same subframe includes or does not include data.

According to the embodiment of the present invention, the different uplink signals include an acyclic SRS and a cyclic SRS, wherein the acyclic SRS is used for an access point, and the cyclic SRS is used for another access point.

For example, the acyclic SRS is used for an eNode B to perform channel measurement, and the cyclic SRS is used for an RRH under the control of the eNode B.

According to the embodiment of the present invention, the different uplink signals include an SRS triggered by a downlink channel information (DCI) format for uplink scheduling and an SRS triggered by a DCI format for downlink scheduling.

For example, when the UE detects that the DCI format is a first format, the first power control mechanism is employed for an SRS triggered by this format, and when the UE detects that the DCI format is a second format, the second power control mechanism is employed for an SRS triggered by this format.

According to the embodiment of the present invention, the method in Fig. 2 further includes: receiving an indication signaling from the access point, wherein the indication signaling is used for indicating that different power control mechanisms are employed when the different uplink signals are transmitted, and the different uplink signals are used for different access points.

For example, the indication signaling may be a specific signaling message, and may also be carried by an existing signaling message.

According to the embodiment of the present invention, the indication signaling is a precoding matrix indicator (PMI) disabling signaling.

For example, a flag bit in the PMI disabling signaling may be used for indicating whether different power control mechanisms are employed when power control is performed on different uplink signals.

Alternatively, as another embodiment, the indication signaling is also used for indicating parameters employed by the power control formulae of different power control mechanisms.

For example, the indication signaling may indicate that a first path loss factor is employed in the first power control mechanism and indicate that a second path loss factor is employed in the second power control mechanism. For example, the indication signaling may indicate that a first power offset is employed in the first power control mechanism and indicate that a second power offset is employed in the second power control mechanism.

Alternatively, as another embodiment, the indication signaling is a downlink control signaling, and a Carrier Indictor Field (CIF) in the downlink control signaling is used for indicating that different power control mechanisms are employed when the different uplink signals are transmitted.

Alternatively, as another embodiment, the indication signaling is downlink control signaling, and the CIF in the downlink control signaling is used for indicating that different power control mechanisms are employed when the different uplink signals are transmitted and indicating downlink pilot signals for measuring the path losses of the different uplink signals.

Alternatively, as another embodiment, the indication signaling also includes path loss reference linking information, which is used for indicating a subset of downlink pilot signals for measuring the path losses of the different uplink signals in the configuration of the at least one downlink pilot signal.

Alternatively, the path loss reference linking information is also used for jointly indicating the subset of the downlink pilot signals for measuring the path loses of the different uplink signals in the configuration of the at least one downlink pilot signal and a carrier on which it is.

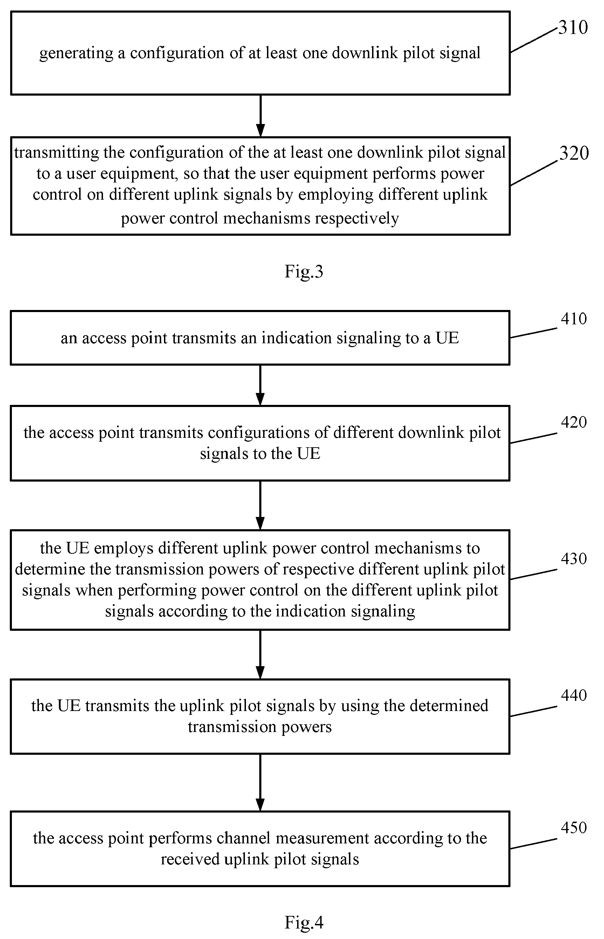

Fig. 3 shows a schematic flowchart of an uplink power control method according to another embodiment of the present invention. The method in Fig. 3 may be performed by the macro base station or the RRH in Fig. 1 and corresponds to the method in Fig. 2, and thus repeated description is appropriately omitted.

310, generating a configuration of at least one downlink pilot signal.

320, transmitting the configuration of the at least one downlink pilot signal to a user equipment, so that the user equipment performs power control on different uplink signals by employing different uplink power control mechanisms respectively.

According to the embodiment of the present invention, corresponding uplink power control mechanisms may be employed for different uplink signals to transmit the different uplink signals by using appropriate transmission powers, thus improving the precision of channel measurement performed by different access points through the corresponding uplink signals.

According to the embodiment of the present invention, the configuration of the at least one downlink pilot signal includes a configuration of CRS and a configuration of CSI-RS.

Alternatively, as another embodiment of the present invention, the configuration of the at least one downlink pilot signal includes a first configuration set of CSI-RSs and a second configuration set of CSI-RSs, and each of the first configuration set of CSI-RSs and the second configuration set of CSI-RSs includes at least one CSI-RS pattern.

Alternatively, as another embodiment of the present invention, the configuration of the at least one downlink pilot signal is a same configuration set of CSI-RSs.

According to the embodiment of the present invention, a closed-loop power adjustment amount or a path loss compensation factor for at least one of the different uplink power control mechanisms is independently set for at least one of the different uplink signals.

According to the embodiment of the present invention, a power offset in a power control formula of at least one of the different uplink signals is independently set by an access point, and the method further includes: transmitting at least three power offsets to the user equipment.

According to the embodiment of the present invention, the method in Fig. 3 further includes: transmitting a DCI format for uplink scheduling to the user equipment to trigger an SRS or transmitting a DCI format for downlink scheduling to the user equipment to trigger an SRS.

Alternatively, as another embodiment, the method in Fig. 3 also includes: generating an indication signaling for indicating that the user equipment employs different power control mechanisms when the different uplink signals are transmitted; and transmitting the indication to the user equipment.

Alternatively, as another embodiment, according to the embodiment of the present invention, the indication signaling is a precoding matrix indicator PMI disabling signaling.

Alternatively, as another embodiment, the indication signaling is further used for indicating parameters employed by the power control formulae of the different power control mechanisms.

Alternatively, as another embodiment, the indication signaling is a downlink control signaling, and a CIF in the downlink control signaling is used for indicating that different power control mechanisms are employed when the different uplink signals are transmitted.

Alternatively, as another embodiment, the indication signaling is a downlink control signaling, and a CIF in the downlink control signaling is used for indicating that different power control mechanisms are employed when the different uplink signals are transmitted and indicating downlink pilot signals for measuring the path losses of the different uplink signals.

Alternatively, as another embodiment, the indication signaling further includes path loss reference linking information, and the path loss reference linking information is used for indicating a subset of downlink pilot signals for measuring the path losses in the configuration of the at least one downlink pilot signal, or used for jointly indicating the subset of the downlink pilot signals for measuring the path losses in the configuration of the at least one downlink pilot signal and a carrier on which it is.

The embodiments of the present invention are described in details in conjunction with specific examples below.

Embodiment I

Fig. 4 shows a schematic flowchart of an uplink power control process according to an embodiment of the present invention.

410, an access point transmits an indication signaling to a UE.

For example, the access point may be an eNode B or an RRH, the embodiment of the present invention is not limited thereto, for example, the access point may also be a relay station or a micro base station. Particularly, in a system supporting a TDD mode, in the case that there is an RRH in the coverage of the eNode B, the eNode B may transmit the indication signaling to the UE, so that the UE may employ different uplink power control mechanisms when an acyclic SRS with the eNode B as a target access point and a cyclic SRS with the RRH as a target access point are transmitted.

For example, the indication signaling is used for indicating that the UE employs different uplink power control mechanisms when uplink pilot signals (such as a cyclic SRS and an acyclic SRS) are transmitted, for example, the first power control mechanism is employed for the cyclic SRS, and the second power control mechanism is employed for the acyclic SRS. In order to illustrate conveniently, in embodiment I, the acyclic SRS is an SRS with the eNode B as a target access point, the cyclic SRS is an SRS with the RRH as a target access point, and vice versa. The indication signaling may be a Precoding Matrix Indicator (PMI) disabling signaling, for example, flag bits in the PMI disabling signaling may be used for indicating whether the UE employs the different uplink power control mechanisms to transmit a cyclic SRS with the eNode B as a target access point and an acyclic SRS with the RRH as a target access point. Alternatively, the indication signaling may also be downlink control signaling, and a Carrier Indicator Field (CIF) in the downlink control signaling may be used for indicating whether the UE employs the different uplink power control mechanisms to transmit different uplink pilot signals, for example, the CIF may be expressed by using 3 bits, and when the value of the CIF is 5 (namely, binary number 101), the indication signaling indicates that the UE employs the different uplink power control mechanisms to perform uplink power control respectively when transmitting the different uplink pilot signals. In addition, the CIF may also be used for indicating downlink pilot signals for measuring the path losses of the different uplink pilot signals, for example, when the value of the CIF is 5, the CIF indicates that the path loss is measured by using a first downlink pilot signal to realize first uplink power control, and when the value of the CIF is 6, the CIF indicates that the path loss is measured by using a second downlink pilot signal to realize second uplink power control. Of course, the PMI and the CIF may be used jointly, for example, the PMI indicates that the UE employs the different uplink power control mechanisms to perform power control respectively when the different uplink pilot signals are transmitted, and the CIF is used for indicating that the UE employs different configurations to transmit the uplink pilot signals. The embodiments of the present invention are not limited thereto, and the indication signaling may also employ the form of a specific signaling message.

420, the access point transmits configurations of different downlink pilot signals to the UE.

For example, the different downlink pilot signals may be a CRS and a CSI-RS. For example, the CRS and the CSI-RS may be configured by the eNode B. For example, the eNode B may configure a CRS for the eNode B and configure a special CSI-RS for a certain RRH. The embodiments of the present invention are not limited thereto, for example, the CSI-RS may also be configured by the RRH.

Alternatively, the different downlink pilot signals may be configured in a configuration set A of CSI-RSs and a configuration set B of CSI-RSs, and the configuration set A of CSI-RSs and the configuration set B of CSI-RSs each include at least one CSI-RS pattern. The configuration set A of CSI-RSs may be specially configured for the eNode B, and the configuration set B of CSI-RSs may be specially configured for the RRH.

Alternatively, the different downlink pilot signals may be configured in the same configuration set of CSI-RSs. For example, one CSI-RS is configured for the eNode B in a CSI-RS pattern of the configuration set of CSI-RSs, and another CSI-RS is configured for the RRH in another CSI-RS pattern of the configuration set of CSI-RSs.

430, the UE employs different uplink power control mechanisms to determine the transmission powers of respective different uplink pilot signals when performing power control on the different uplink pilot signals according to the indication signaling.

For example, in the case that the indication signaling is received, the UE may perform path loss compensation on the transmission powers of the different uplink pilot signals based on the different uplink power control mechanisms when transmitting the different uplink pilot signal.

For example, when an uplink pilot signal is an SRS, the calculation formula of the transmission power of the SRS is as follows:

$$P_{SRS,c}(i) = \min\left\{ P_{CMAX,c}(i), P_{SRS\_OFFSET,c}(m) + 10\log_{10}(M_{SRS,c}) + P_{O\_PUSCH,c}(j) + \alpha_c(j) \cdot PL_{c,m} + f_c(i) \right\}$$

$$(2)$$

wherein, m expresses the type of the SRS, for example, when m is 0, the SRS is a cyclic SRS (the trigger type of the SRS is trigger type 0), and when m is 1, the SRS is an acyclic SRS (the trigger type of the SRS is trigger type 1); i expresses the number of a subframe of carrier c, $P_{SRS,c}(i)$ expresses the transmission power of the SRS in subframe i, $P_{CMAX,c}(i)$ expresses the allowable maximum transmission power of the UE, $P_{SRS\_OFFSET,c}(m)$ expresses the power offset of the SRS relative to PUSCH data, $M_{SRS,c}$ expresses the transmission bandwidth of the SRS in subframe i, $P_{O\_PUSCH,c}(j)$ is the target receiving power of a PUSCH, $\alpha_c(j)$ is a path loss compensation factor, $f_c(i)$ is a closed-loop power adjustment amount of the PUSCH, and $PL_{c,m}$ is the downlink transmission path losses for different SRSs, measured by the UE, for example, a first uplink power control mechanism may be used for performing power compensation on the transmission power of a cyclic SRS based on the path loss compensation $PL_{c,0}$ of the transmission power of the cyclic SRS, and a second uplink power control mechanism may be used for performing power compensation on the transmission power of an acyclic SRS based on the path loss compensation $PL_{c,1}$ of the transmission power of the acyclic SRS, wherein the $PL_{c,0}$ and the $PL_{c,1}$ may be path losses measured based on downlink pilot signals of different configurations.

For example, the path losses measured based on the downlink pilot signals of the different configurations may have the following several cases:

1) the $PL_{c,0}$ is a path loss measured based on a configuration of a CSI-RS, and the $PL_{c,1}$ is a path loss measured based on a configuration of a CRS. For example, the UE measures, based on a CRS configured for an eNode B, the RSRP of the CRS, and the path loss obtained according to the RSRP is $PL_{c,1}$, and the UE measures, based on a CSI-RS configured for an RRH, the RSRP of the CSI-RS, and the path loss obtained according to the RSRP is $PL_{c,0}$.

2) the $PL_{c,0}$ is a path loss measured based on a configuration set A of CSI-RSs, the configuration set A of CSI-RSs includes corresponding information of at least one CSI-RS pattern, or the $PL_{c,1}$ is a path loss measured based on a configuration set B of CSI-RSs, the configuration set B of CSI-RSs includes corresponding information of at least one CSI-RS pattern, and the configuration set A of CSI-RSs and the configuration set B of CSI-RSs may include the same CSI-RS pattern or totally different CSI-RS patterns. For example, the UE may measure the RSRP of a certain CSI-RS based on a configuration set A of CSI-RSs configured for an RRH, and obtain the $PL_{c,0}$ according to the RSRP; and the UE may measure the RSRP of a certain CSI-RS based on a configuration set B of CSI-RSs configured for an eNode B, and obtaining the $PL_{c,1}$ according to the RSRP.

3) the eNode B or the RRH may inform the UE of only one configured pilot set (such as the configuration set A of CSI-RSs) for different uplink pilot signals, and for the different uplink pilot signals, the functions for calculating the path losses based on the pilot set are different, in other words, methods for measuring the path losses based on the pilot set are different. A Cyclic SRS and an acyclic SRS are still taken as an example, for simplicity, here assuming that the pilot set may include pilots RS_a and RS_b, the path loss of the cyclic SRS is $PL_{c,0} = f_0(RS\_a, RS\_b)$, the path loss of the acyclic SRS is $PL_{c,1} = f_1(RS\_a, RS\_b)$, the RS_a is CSI-RS a configured for a downlink, and the RS_b is CSI-RS b configured for an uplink. Simply, the path loss may be determined through the following measurement method: the path loss measured through the CSI-RS a is PL-a, the path loss measured through the CSI-RS b is PL-b, $Pl_{c,0} = \min(PL\_a, PL\_b)$, and $PL_{c,1} = \max(PL\_a, PL\_b)$. Because the UE selects the higher path loss rather than the lower path loss from the measured path losses to compensate the transmission power of the acyclic SRS with the eNode B as a target access point, the channel measurement precision of the eNode B is improved. The embodiments of the present invention are not limited thereto, for example, in the case that the UE is closer to the eNode B than to the RRH, $PL_{c,1} = \min(PL\_a, PL\_b)$ and $PL_{c,0} = \max(PL\_a, PL\_b)$ may also be selected to avoid unnecessarily using a higher transmission power to transmit the acyclic SRS.

It shall be noted that, the modes that the UE selects the corresponding downlink pilot signals to measure the path losses for the different uplink pilot signals may be appointed by the UE and the base station or informed in an explicit signaling mode through a signaling, for example, through path loss reference linking information described in embodiment VII later, which is not described in details here.

440, the UE transmits the uplink pilot signals by using the determined transmission powers. For example, the UE transmits the cyclic SRS and the acyclic SRS by using the transmission power $P_{\text{SRS,c}}(i)$ of the cyclic SRS and the transmission power $P_{\text{SRS,c}}(i)$ of the acyclic SRS respectively.

450, the access point performs channel measurement according to the received uplink pilot signals.

For example, when receiving the acyclic SRS, the eNode B measures the acyclic SRS to acquire uplink channel quality information, and acquiring downlink channel quality information by using the reciprocity of channels in a TDD system.

The UE may compensate the transmission power of the acyclic SRS with the eNode B as the target access point by using the $PL_{c,1}$ to avoid compensating the transmission power of the acyclic SRS with the eNode B as the target access point by using the $PL_{c,0}$, thus improving the channel measurement precision of the eNode B in the case that the UE is farther away from the eNode B than from the RRH. Further, when the UE is closer to the eNode B than to the RRH, the power consumption for transmitting the uplink pilot signals may be reduced.

Embodiment II

Similar to embodiment I, in embodiment II, an access point issues an indication signaling, and UE employs different uplink power control mechanisms according to the indication signaling when performing power control on different uplink pilot signals to determine the transmission powers of respective different uplink pilot signals. Different from embodiment I in which power compensation is performed by measuring the path losses of the different uplink pilot signals used by different access points respectively, in embodiment II, parameters such as power offset $P_{\text{SRS\_OFFSET,c}}(m)$, path loss compensation factor $\alpha_c(j)$ or closed-loop power adjustment amount $f_c(i)$ in a calculation formula of the transmission power of at least one of the different uplink pilot signals may be independently set, the values of the parameters may be different, and power control may be performed on the transmission powers of the different uplink pilot signals likewise by independently setting these parameters to perform corresponding power compensation, and thus improving the precision of channel measurement. The parameters may be transmitted through specific message signaling or carried by a conventional message signaling, for example, may be carried by a downlink control signaling. The parameters may be independently set by the access point.

As an example, in the case that the $P_{\text{SRS\_OFFSET,c}}(m)$ is independently set to perform power compensation, the definition of the $P_{\text{SRS\_OFFSET,c}}(m)$ may be extended: when m is 2, the value of the $P_{\text{SRS\_OFFSET,c}}(m)$ is $P_{\text{SRS\_OFFSET,c}}(2)$, wherein the value range of the $P_{\text{SRS\_OFFSET,c}}(2)$ is [-A,B]dB. For example, when a first power control mechanism is employed, for the cyclic SRS, the value of the $P_{\text{SRS\_OFFSET,c}}(m)$ may be $P_{\text{SRSOFFSET,c}}(0)$ (m=0); and for the acyclic SRS, the value of the $P_{\text{SRS\_OFFSET,c}}(m)$ may be $P_{\text{SRS\_OFFSET,c}}(1)$ (m=1), wherein the value range of the $P_{\text{SRS\_OFFSET,c}}(0)$ and the $P_{\text{SRS\_OFFSET,c}}(1)$ is [-C,D]dB. When a second power control mechanism is employed, no matter for the cyclic SRS or the acyclic SRS, the value of the $P_{\text{SRS\_OFFSET,c}}(m)$ is $P_{\text{SRS\_OFFSET,c}}(2)$ (m=2), and at this moment, the calculation formula of the transmission power is as follows:

$$P_{\text{SRS,c}}\left(i\right)=\min\left\{ P_{\text{CMAX,c}}(i),\, P_{\text{SRS\_OFFSET,c}}(2)+10\log_{10}(M_{\text{SRS,c}})+P_{\text{O\_PUSCH,c}}(j)+\alpha_c(j)\cdot PL_{c,m}+f_c\left(i\right)\right\}$$

As an another example, the path loss compensation factor $\alpha_c(j)$ may be generally configured by the eNode B and transmitted to each UE in the form of broadcast, and according to the embodiment of the present invention, the $\alpha_c(j)$ may be independently and specially set for an uplink pilot signal used by a certain access point to perform corresponding power compensation. In the case that the $\alpha_{c,2}(j)$ or the $\alpha_{c,1}(j)$ is independently set, the eNode B may independently set an appropriate $\alpha_{c,2}(j)$ for an acyclic SRS used by the eNode B in the DAS system, for example, in the case that the UE is farther away from the eNode B than from the RRH, the $\alpha_{c,2}(j)$ may be independently set, so that $\alpha_{c,2}(j)>\alpha_{c,1}(j)$, vice versa, wherein $\alpha_{c,1}(j)$ is the path loss compensation factor of the cyclic SRS, and $\alpha_{c,2}(j)$ is the path loss compensation factor of the acyclic SRS. When the first power control mechanism is employed, the calculation formula of the transmission power of the cyclic SRS is as follows:

$$P_{\text{SRS,c}}\left(i\right)=\min\left\{ P_{\text{CMAX,c}}(i),\, P_{\text{SRS\_OFFSET,c}}(m)+10\log_{10}(M_{\text{SRS,c}})+P_{\text{O\_PUSCH,c}}(j)+\alpha_{c,1}(j)\cdot PL_c+f_c\left(i\right)\right\}\ ,$$

when the second power control mechanism is employed, the calculation formula of the transmission power of the acyclic SRS is as follows:

$$P_{\text{SRS,c}}\left(i\right)=\min\left\{\ P_{\text{CMAX,c}}(i),\ P_{\text{SRS\_OFFSET,c}}(m)+10\log_{10}(M_{\text{SRS,c}})+P_{\text{O\_PUSCH,c}}(j)+\alpha_c(j)\cdot PL_{c,2}+f_c\left(i\right)\right\}$$

Alternatively, in the case that $f_c(i)$ is independently set, for example, the $f_c(i)$ may be independently set based on the principle similar to that for setting the $a_c(j)$, and in the case that the UE is farther away from the eNode B than from the RRH, the $f_{c,2}(i)$ may be independently set, so that the $f_{c,2}(i)>f_{c,1}(i)$, wherein the $f_{c,1}(i)$ is the closed-loop power adjustment amount of the cyclic SRS and the $f_{c,2}(i)$ is the closed-loop power adjustment amount of the acyclic SRS. When the first power control mechanism is employed, the calculation formula of the transmission power of the cyclic SRS is as follows:

$$P_{\text{SRS,c}}\left(i\right)=\min\left\{\ P_{\text{CMAX,c}}(i),\ P_{\text{SRS\_OFFSET,c}}(m)+10\log_{10}(M_{\text{SRS,c}})+P_{\text{O\_PUSCH,c}}(j)+\alpha_c(j)\cdot PL_c+f_{c,1}\left(i\right)\right\}\ ,$$

when the second power control mechanism is employed, the calculation formula of the transmission power of the acyclic SRS is as follows:

$$P_{\text{SRS,c}}\left(i\right)=\min\left\{\ P_{\text{CMAX,c}}(i),\ P_{\text{SRS\_OFFSET,c}}(m)+10\log_{10}(M_{\text{SRS,c}})+P_{\text{O\_PUSCH,c}}(j)+\alpha_c(j)\cdot PL_c+f_{c,2}\left(i\right)\right\}$$

It shall be understood that, more than two parameters may be set jointly, for example, the access point simultaneously and independently sets the $\alpha_c(j)$ and the $f_c(i)$ of a certain uplink pilot signal to compensate the power of the uplink pilot signal.

In addition, the parameters employed by the power control formulae of the different power control mechanisms may be indicated by the indication signaling. For example, the indication signaling may indicate that the first power control mechanism employs a first path loss factor and indicate that the second power control mechanism employs a second path loss factor. Also, the indication signaling may indicate the first power control mechanism to employ the power offset of which the value range is [-A,B]dB and indicate the second power control mechanism to employ the power offset of which the value range is [-C,D]dB.

Embodiment III

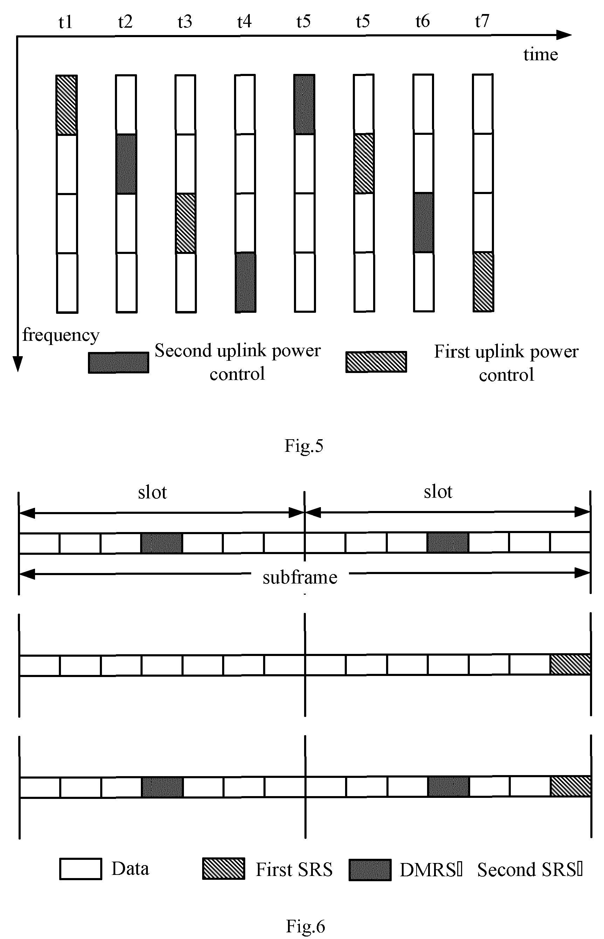

Fig. 5 shows a schematic view of a configuration of uplink pilot signals according to an embodiment of the present invention.

Similar to embodiment I, in embodiment III, an access point transmits an indication signaling to a UE, and the UE employs different uplink power control mechanisms according to the indication signaling when performing power control on different uplink pilot signals to determine the respective transmission powers of the different uplink pilot signals. Further, SRSs are still taken as an example of the uplink pilot signals. Please see Fig. 5, when the UE configures hopping, power control may be performed on the SRSs by employing different power control mechanisms according to different subframes, different bands, different sequences or different antennas.

For example, in the case that the different uplink pilot signals are cyclic SRSs, the cyclic SRSs employing the first power control mechanism may be transmitted by being configured in a first subframe, a first band or a first sequence, or transmitted by a first transmitting antenna port, and the cyclic SRSs employing the second power control mechanism may be transmitted by being configured in a second subframe, a second band or a second sequence, or transmitted by a second transmitting antenna port.

Alternatively, in the case that the different uplink pilot signals are acyclic SRSs, the acyclic SRSs employing the first power control mechanism may be transmitted by being configured in a first subframe, a first band or a first sequence, or transmitted by a first transmitting antenna port, and the acyclic SRSs employing the second power control mechanism may be transmitted by being configured in a second subframe, a second band or a second sequence, or transmitted by a second transmitting antenna port.

Alternatively, in the case that the uplink pilot signals are cyclic SRSs and acyclic SRSs respectively, the cyclic SRSs employing the first power control mechanism may be transmitted by being configured in a first subframe, a first band or a first sequence, or transmitted by a first transmitting antenna port, and the acyclic SRSs employing the second power control mechanism may be transmitted by being configured in a second subframe, a second band or a second sequence, or transmitted by a second transmitting antenna port.

The first power control mechanism and the second power control mechanism may be those in embodiment II or those in embodiment I respectively.

Embodiment IV

Fig. 6 shows a schematic view of a configuration of uplink pilot signals according to another embodiment of the present invention.

Similar to embodiment I, in embodiment IV, an access point transmits an indication signaling to an UE, and the UE employs different uplink power control mechanisms according to the indication signaling when performing power control on different uplink pilot signals to determine the respective transmission powers of the different uplink pilot signals. The first power control mechanism and the second power control mechanism may be methods in embodiment I, embodiment II and embodiment III and may employ different power control formulae, or employ the same power control formula, but certain parameters in the power control formula are independently configured. Further, SRSs are still taken as an example. Please see Fig. 6, different forms may be employed when the UE transmits the first SRS and the second SRS, the first SRS is still transmitted on the last symbol of each subframe, but the second SRS may be Demodulation Reference Signals (DMRS), for example, the DMRS is used as the second SRS and transmitted, namely, the access point uses the DMRS as the SRS to perform channel measurement.

It is taken as an example for illustrating below that path loss compensation factor $\alpha_c(j)$ or closed-loop power adjustment amount $f_c(i)$ is changed, and when power control is performed, the $f_{c,2}(i)$ of the closed-loop transmission power control (TPC) signaling of the DMRS employing the second power control mechanism is independent from the $f_{c,1}(i)$ of the first SRS employing the first power control mechanism. For the DMRS, the power control formula may be as follows:

$$P_{\text{SRS,c}}(i) = \min\left\{ P_{\text{CMAX,c}}(i), P_{\text{SRS\_OFFSET,c}}(m) + 10\log_{10}(M_{\text{SRS,c}}) + P_{\text{O\_PUSCH,c}}(j) + \alpha_c(j) \cdot PL_c + f_{c,2}(i) \right\},$$

for the first SRS, the power control formula may be as follows:

$$P_{\text{SRS,c}}(i) = \min\left\{ P_{\text{CMAX,c}}(i), P_{\text{SRS\_OFFSET,c}}(m) + 10\log_{10}(M_{\text{SRS,c}}) + P_{\text{O\_PUSCH,c}}(j) + \alpha_c(j) \cdot PL_c + f_{c,1}(i) \right\}$$

Alternatively, when power control is performed, the $\alpha_{c,2}(j)$ of the DMRS employing the second power control mechanism is independent from the $\alpha_{c,1}(j)$ of the first SRS employing the first power control mechanism, and in this case, for the DMRS, the power control formula may be as follows:

$$P_{\text{SRS,c}}(i) = \min\left\{ P_{\text{CMAX,c}}(i), P_{\text{SRS\_OFFSET,c}}(m) + 10\log_{10}(M_{\text{SRS,c}}) + P_{\text{O\_PUSCH,c}}(j) + \alpha_{c,2}(j) \cdot PL_c + f_c(i) \right\},$$

for the first SRS, the power control formula is as follows:

$$P_{\text{SRS,c}}(i) = \min\left\{ P_{\text{CMAX,c}}(i), P_{\text{SRS\_OFFSET,c}}(m) + 10\log_{10}(M_{\text{SRS,c}}) + P_{\text{O\_PUSCH,c}}(j) + \alpha_{c,1}(j) \cdot PL_c + f_c(i) \right\}$$

In addition, when the first SRS and the DMRS serving as the second SRS are transmitted, there are the following several cases:

1) the first SRS and the second SRS are separately transmitted in different subframes, and there is not uplink data (such as PUSCH data) in the subframes;

2) the first SRS and the second SRS are separately transmitted in different subframes, and there is uplink data in the subframes;

3) the first SRS and the second SRS are simultaneously transmitted in the same subframe, and there is uplink data in the subframe;

4) the first SRS and the second SRS are simultaneously transmitted in the same subframe, and there is not uplink data in the subframe.

In the aforementioned different cases, the uplink power control mechanisms of the first SRS and the DMRS serving as the second SRS may be different. For example, when the DMRS and the PUSCH data are transmitted together, the closed-loop power adjustment amount in the power control formula of the DMRS may be consistent with that in the power control formula of the PUSCH data, but other parameters in the formula may be relatively independent from the corresponding parameters in the power control formula of the PUSCH data, or have different values.

Some parameters in the power control formula of the DMRS may be independent and be not consistent with the corresponding parameters in the power control formula of the PUSCH data, and in this way, these parameters may be independently set for the access point using the DMRS to perform power compensation on the transmission power of the DMRS, thus improving the channel measurement precision of the access point.

Embodiment V

Similar to embodiment I, in embodiment V, an access point issues an indication signaling to a UE, and the UE employs different uplink power control mechanisms when performing power control on different uplink pilot signals to determine the respective transmission powers of the different uplink pilot signals according to the indication signaling. Further, in embodiment V, the different uplink pilot signals may include an acyclic SRS triggered by a downlink resource indication (DL grant) and an acyclic SRS triggered by an uplink resource indication (UL grant). For example, the SRS triggered by Downlink Channel Information (DCI) format 0 or DCT format 4 may employ the first uplink power control mechanism, and the SRS triggered by DCI format 1A, 2B or 2C may employ the second uplink power control mechanism. The UE detects the DCI format on a downlink control channel, for example, the UE determines the specific format of DCI according to the content or length of the DCI format to determine whether the first uplink power control mechanism or the second uplink control mechanism is employed to detect the path loss. Through the aforementioned scheme, an uplink control mechanism mode may be flexibly selected.

Embodiment VI

Similar to embodiment I, in embodiment VI, an access point transmits an indication signaling to a UE, and the UE employs different uplink power control mechanisms according to the indication signaling when performing power control on different uplink pilot signals to determine respective transmission powers of the different uplink pilot signals. Further, the access point may transmit path loss reference linking information for indicating which one in configurations of different downlink pilot signals is used respectively to measure the path losses of the different uplink pilot signals to the UE. The path loss reference linking information may be carried in the indication signaling, or may be path loss reference Linking (pathlossReferenceLinking) in a downlink control signaling or a specific signaling message.

As an example, the different uplink pilot signals are a first SRS and a second SRS for different access points, wherein the pilot of the path loss reference linking of the first SRS is the same as the pilot of the path loss reference linking of an uplink shared channel, namely, the first SRS and the uplink shared channel take the same access point (such as an RRH) as a target access point, and the second SRS take a control base station (such as a macro base station) of an RRH as a target access point. The path loss reference linking may indicate a configuration set of CSI-RSs for measuring the path losses of the uplink pilot signals (the second SRS) and the uplink shared channel, for example, in the case that the configuration set of CSI-RSs is {CSI-RS1, CSI-RS2, CSI-RS3,...CSI-RSN}, if the path loss reference linking of the uplink shared channel is 10100 and the path loss reference linking of the second SRS is 01000, the downlink pilot signals of the path loss reference linking of the uplink shared channel are CSI-RS1 and CSI-RS3, and the downlink pilot signal of the path loss reference linking of the first SRS is the same as that of the uplink shared channel; and the downlink pilot signal of the path loss reference linking of the second SRS is CSI-RS2. Therefore, the UE may flexibly select a downlink pilot signal according to the path loss reference linking when measuring the path loss.

As another example, the access point may generate a configuration of two CSI-RSs, wherein, the configuration information of the first CSI-RS includes a transmission power corresponding to the first CSI-RS or a difference between the transmission power and the CRS power; and the configuration information of the second CSI-RS includes a transmission power corresponding to the second CSI-RS or a difference between the transmission power and the CRS power. In this case, the path loss reference linking may be used for designating that the path loss is measured based on the configuration information of the first CSI-RS or the configuration information of the second CSI-RS. For example, values 0 and 1 of the path loss reference linking of 1 bit may be used for indicating that it is measured based on the first CSI-RS when the value is 0, and it is measured based on the second CSI when the value is 1.

In the case of a multi-carrier, the path loss reference linking may be used for indicating on which carrier the second CS-RS or the first CSI-RS is jointly encoded, the presence of a PCell and an SCell is taken as an example for illustration here, and when the path loss reference linking is 2 bits, meanings represented by four combinations are shown in table 1:

Table 1

| 00 | PCell + first CSI-RS |
|----|----------------------|
| 01 | PCell + second CSI-RS |
| 10 | SCell + first CSI-RS |
| 11 | SCell + second CSI-RS |

For example, 00 indicates that path loss measurement is performed based on the first CSI-RS on the PCell, 11 indicates that path loss measurement is performed based on the second CSI-RS on the SCell and the like.

As another example, the different uplink pilot signals are a first SRS and a second SRS for different access points. The access point may configure two CSI-RS sets, wherein CSI-RSs included in the first configuration set of CSI-RSs are {CSI-RS1, CSI-RS2,...CSI-RSn}, CSI-RSs included in the second configuration set of CSI-RSs are {CSI-RSn+1, CSI-RSn+2,...CSI-RSm}, pathlossReferenceLinking_a indicates the path loss of the uplink shared channel is measured based on the configuration information of which CSI-RSs in the first configuration set of CSI-RSs, and the path losses of the first SRSs and the uplink shared channel are measured based on the configuration information of the same CSI-RSs; and pathlossReferenceLinking_b indicates the path loss of the second SRSs is measured based on the configuration information of which CSI-RSs in the second configuration set of CSI-RSs.

Embodiment VII

Similar to embodiment I, in embodiment VII, an access point issues an indication signaling, and UE employs different uplink power control mechanisms according to the indication signaling when performing power control on different uplink pilot signals to determine the respective transmission powers of the different uplink pilot signals. Further, when the path losses of the different uplink pilot signals are measured by employing the configurations of different downlink pilot signals, the filtering of the RSRPs of the configuration of the different downlink pilot signals is independent.

The path loses may be measured based on the configurations of the different downlink pilot signals (such as a CRS or a CSI-RS), for example, assuming that the path losses are measured based on pilot a and pilot b respectively, the RSRP measured through pilot a at the moment T is RSRPa (T), and the RSRP of pilot a measured at the previous moment is RSRPa (T-n), wherein n is a positive integer more than 1. The RSRPa (T) and the RSRPa (T-n) may be filtered to obtain filterd RSRPa at the moment T. In this way, the path loss measured based on pilot a is PL_a=Tx_power(CSI-RSa)-filterd RSRPa, wherein Tx_power(CSI-RSa) is the transmission power of the CSI-RSa. Similarly, the path loss PL_b=Tx_power(CSI-RSb)-filterd RSRPb measured based on pilot b may be obtained, wherein Tx_power(CSI-RSb) is the transmission power of CSI-RSb. However, the filtering of the RSRP of pilot b is independent from the filtering of the RSRP of pilot a to avoid producing adverse effects on the measurement of the path losses of the two pilots, so that uplink signals on appropriate power level may be provided.

The embodiments given above are not completely independent, and may be used together as required. These variations fall into the scope of the embodiments of the present invention.

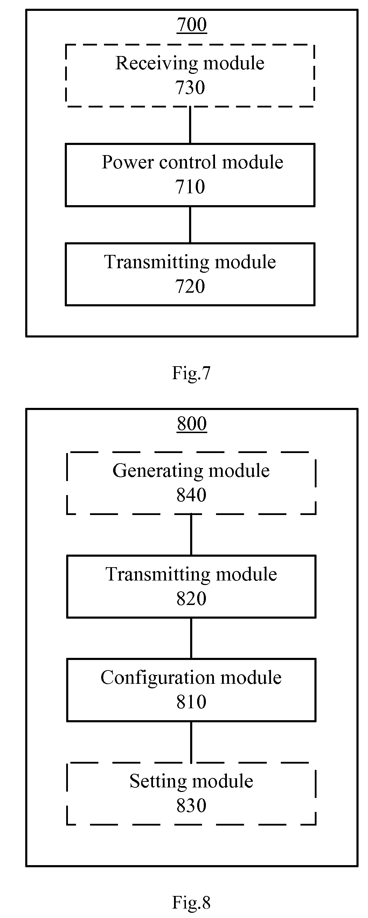

Fig. 7 is a structural schematic view of user equipment of an embodiment of the present invention. The user equipment 700 in Fig. 7 includes a power control module 710 and a transmitting module 720.

The power control module 710 performs power control on different uplink signals by employing different uplink power control mechanisms respectively to determine respective transmission powers of the different uplink signals. The transmitting module 720 transmits the different uplink signals by using the determined transmission powers respectively.

According to the embodiment of the present invention, the corresponding uplink power control mechanisms may be employed for the different uplink signals to transmit the different uplink signals with appropriate transmission powers, thus improving the precision of channel measurement performed by different access points through the corresponding uplink signals.

According to the embodiment of the present invention, the power control module 710 receives a configuration of at least one downlink pilot signal from an access point, measures the path losses of the different uplink signals based on the configuration of the at least one downlink pilot signal respectively, and compensates the transmission powers of the different uplink signals according to the measured path losses.

According to the embodiment of the present invention, the power control formulae of the different uplink power control mechanisms are different so that power compensation is performed, or power control formulae of the different uplink power control mechanisms are the same, and at least one parameter of the power control formulae of the different uplink power control mechanisms is independently configured so that corresponding power compensation is performed on the different uplink signals.

Alternatively, as another embodiment of the present invention, the user equipment 700 further includes a receiving module 730. The receiving module 730 receives path loss reference linking information from an access point, for indicating a subset of downlink pilot signals for measuring the path losses of the different uplink signals in the configuration of the at least one downlink pilot signal, or for jointly indicating the subset of the downlink pilot signals for measuring the path losses of the different uplink signals in the configuration of the at least one downlink pilot signal and a carrier on which it is.

According to the embodiment of the present invention, when the power control module 710 measures the path losses of the different uplink signals by employing the configuration of the at least one downlink pilot signal, the filtering of an RSRP of the configuration of the at least one downlink pilot signal is independent.

The transmitting module 720 transmits the different uplink signals by configuring the different uplink signals in subframes of different groups, bands of different groups or sequences of transmitted through different transmitting antenna ports.

The different uplink signals include acyclic an SRS and a cyclic SRS, wherein the acyclic SRS is used for an access point, and the cyclic SRS is used for another access point.

The different uplink signals include a DMRS and an SRS.

The different uplink signals include an SRS triggered by a downlink channel information DCI format for uplink scheduling and an SRS triggered by a DCI format for downlink scheduling.

Optionally, as another embodiment, the user equipment 700 further includes a receiving module 730. The receiving module 730 receives indication signaling from the access point, and the indication signaling is used for indicating that different power control mechanisms are employed when the different uplink signals are transmitted, wherein the different uplink signals are used for different access points.

The user equipment 700 may perform each process of the method shown in Fig. 2, and may perform uplink power control on the uplink signals in the modes of embodiments I to VII. Therefore, in order to avoid repetition, detailed description is appropriately omitted.

Fig. 8 is a structural schematic view of an access point 800 of another embodiment of the present invention. The access point 800 includes a configuration module 810 and a transmitting module 820.

The configuration module 810 generates a configuration of at least one downlink pilot signal. The transmitting module 820 transmits the configuration of the at least one downlink pilot signal to a user equipment, so that the user equipment performs power control on different uplink signals by employing different uplink power control mechanisms respectively.

According to the embodiment of the present invention, the corresponding uplink power control mechanisms are employed for the different uplink signals to transmit the different uplink signals with appropriate transmission power, thus improving the precision of channel measurement performed by different access points through the corresponding uplink signals.

Alternatively, as another embodiment, the access point 800 further includes a setting module 830. For at least one of the different uplink signals, the setting module 830 independently sets a closed-loop power adjustment amount or a path compensation factor for at least one of the different uplink power control mechanisms.

Alternatively, as another embodiment, the access point 800 further includes a generating module 840. The generating module 840 generates indication signaling, and the indication signaling is used for indicating that the UE employs the different power control mechanisms when the different uplink signals are transmitted, wherein the transmitting module 820 also transmits the indication signaling to the UE.

According to the embodiment of the present invention, the access point 800 is a macro base station, a radio remote head, a relay station or a micro base station in a CoMP transmission system.

The access point 800 may perform each process of the method shown in Fig. 3, and may perform uplink power control on the uplink signals in the modes of embodiments I to VII. Therefore, in order to avoid repetition, detailed description is appropriately omitted.

A communication system according to the embodiments of the present invention may include the user equipment 700 or the access point 800.

The present invention solves the problem that SRS uplink power control in an LTE-A system needs to ensure the precision of uplink measurement and also needs to ensure the precision of downlink measurement based on the reciprocity of channels.

Those of ordinary skill in the art may recognize that the units and algorithmic steps of the examples described in conjunction with the embodiments of the present invention may be implemented by electronic hardware or the combination of computer software and electronic hardware. Whether these functions are executed in a hardware or software mode depends on specific applications and design constraint conditions of the technical solution. For each specific application, professionals may implement the described functions by different methods, but this implementation shall not be considered as being beyond the scope of the present invention.

Those skilled in the art may clearly understand that, for the purpose of better convenience and briefness in description, for the specific working processes of the above-described systems, devices and units, reference could be made to the corresponding processes in the embodiments of the aforementioned methods, which are not described in details here.

In the several embodiments provided in the application, it shall be understood that the disclosed systems, devices and methods may be implemented in other modes. For example, the embodiments of the above-described devices are only exemplary, for example, the division of the units is only a logic function division, other division modes may be adopted in actual implementation, e.g., multiple units or components may be combined or integrated in another system, or some features may be omitted or are not executed. From another point of view, the displayed or discussed mutual coupling or direct coupling or communication connection may be indirect coupling or communication connection through some interfaces, devices or units, and may also be in electrical, mechanical or other forms.

The units illustrated as separate components may be or may not be physically separated, and the components displayed as units may be or may not be physical units, that is to say, the components may be positioned at one place or may also be distributed on multiple network units. The objective of the solution of the embodiments may be fulfilled by selecting part of or all of the units according to actual needs.

In addition, in various embodiments of the present invention, the functional units may be integrated in one processing unit, or the function units may separately and physically exist, or two or more units may be integrated in one unit.

When the functions are implemented in the form of software functional units and sold or used as independent products, the functions may be stored in a computer-readable storage medium. Based on such understanding, the technical solution of the present invention substantially, or the part of the present invention making contribution to the prior art, or a part of the technical solution may be embodied in the form of a software product, and the computer software product is stored in a storage medium, which includes multiple instructions enabling computer equipment (which may be a personal computer, a server, network equipment or the like) to execute all of or part of the steps in the methods of the embodiments of the present invention. The aforementioned storage medium includes: various media capable of storing program codes, such as a USB disk, a mobile hard disk, a read-only memory (ROM), a random access memory (RAM), a disk, an optical disk or the like.

Described above is the specific embodiments of the present invention only, but the scope of the present invention is not limited thereto, those skilled in the art could readily think of variations or substitutions within the disclosed technical scope of the present invention, and these variations or substitutions shall fall within the scope of the present invention. Thus, the protection scope of the claims should be defined by that of the present invention.

**Claims**

1. A method for uplink power control, comprising:

   performing (210), by a user equipment, power control on different uplink signals by employing different uplink power control mechanisms respectively to determine respective transmission powers of the different uplink signals, wherein the different uplink power control mechanisms means that at least one parameter in each uplink power control formula is independently set;
   transmitting (220), by the user equipment, the different uplink signals by using the determined transmission powers, respectively,
   wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises a closed-loop power adjustment amount, target receiving power of a Physical Uplink Shared Channel, or a path loss compensation factor, and the closed-loop power adjustment amount, the target receiving power of a Physical Uplink Shared Channel, or the path loss compensation factor is independently configured by an access point.

2. The method according to claim 1, wherein the performing power control on different uplink signals by employing different uplink power control mechanisms respectively comprises:

   receiving a configuration of at least one downlink pilot signal;
   measuring path losses of the different uplink signals based on the configuration of the at least one downlink pilot signal respectively;
   compensating the transmission powers of the different uplink signals according to the measured path losses.

3. The method according to claim 2, wherein the measuring path losses of the different uplink signals based on the configuration of the at least one downlink pilot signal respectively comprises:

measuring the path losses of the different uplink signals based on a configuration of common reference signal CRS and a configuration of channel state information-reference signal CSI-RS respectively.

4. The method according to claim 2, wherein the measuring path losses of the different uplink signals based on the configuration of the at least one downlink pilot signal respectively comprises:

measuring the path losses of the different uplink signals based on a first configuration set of CSI-RSs and a second configuration set of CSI-RSs respectively, wherein each of the first configuration set of CSI-RSs and the second configuration set of CSI-RSs comprises at least one CSI-RS pattern.

5. The method according to claim 2, wherein the measuring path losses of the different uplink signals based on the configuration of the at least one downlink pilot signal respectively comprises:

measuring the path losses of the different uplink signals based on a same configuration set of CSI-RSs by using different functions respectively, wherein the functions are the ones of a transmission power and a Reference Signal Receiving Power RSRP of a CSI-RS in the configuration set of CSI-RSs.

6. The method according to any one of claims 1-5, wherein the different uplink signals are transmitted by being configured in subframes of different groups.

7. The method according to any one of claims 1-5, wherein the different uplink signals are transmitted by being configured in bands of different groups.

8. The method according to any one of claims 1-5, wherein the different uplink signals are transmitted by being configured in sequences of different groups.

9. The method according to any one of claims 1-5, wherein the different uplink signals are transmitted through different transmitting antenna ports.

10. The method according to any of claims 6-9, wherein the different uplink signals comprise different cyclic sounding reference signals (SRSs).

11. The method according to any of claims 6-9, wherein the different uplink signals comprise different acyclic SRSs.

12. The method according to claims 6-9, wherein the different uplink signals comprise a cyclic SRS and an acyclic SRS.

13. The method according to any one of claims 1-5, wherein a power offset in a power control formula of at least one of the different uplink signals is independently set by an access point, wherein power offsets of a cyclic SRS and an acyclic SRS employing a first power control mechanism are a first power offset and a second power offset respectively, and power offsets of a cyclic SRS and an acyclic SRS employing a second power control mechanism are a third power offset and a fourth power offset respectively, wherein, the third power offset and the fourth power offset are the same or different, and value ranges of the third power offset and the fourth power offset are different from value ranges of the first power offset and the second power offset.

14. The method according to any one of claims 1-5, wherein the different uplink signals comprise a demodulation reference signal DMRS and an SRS.

15. The method according to claim 14, wherein the DMRS and the SRS are separately transmitted in different subframes, wherein the different subframes include or do not include data.

16. The method according to claim 14, wherein the DMRS and the SRS are transmitted in the same subframe, wherein the same subframe includes or does not include data.

17. The method according to any one of claims 1-5, wherein the different uplink signals comprise an acyclic SRS and a cyclic SRS, wherein the acyclic SRS is used for an access point, and the cyclic SRS is used for another access point.

**18.** The method according to any one of claims 1-5, wherein the different uplink signals comprise an SRS triggered by a downlink channel information DCI format for uplink scheduling and an SRS triggered by a DCI format for downlink scheduling.

**19.** The method according to any one of claims 1-5, further comprising:

receiving an indication signaling from the access point, wherein the indication signaling is used for indicating that different power control mechanisms are employed when the different uplink signals are transmitted, and the different uplink signals are used for different access points.

**20.** The method according to claim 19, wherein
the indication signaling is a precoding matrix indicator PMI disabling signaling.

**21.** The method according to claim 19, wherein
the indication signaling is further used for indicating parameters employed by power control formulae of the different power control mechanisms.

**22.** The method according to claim 19, wherein
the indication signaling is a downlink control signaling, and a Carrier Indictor Field (CIF) in the downlink control signaling is used for indicating that the different power control mechanisms are employed when the different uplink signals are transmitted.

**23.** The method according to claim 19, wherein
the indication signaling is a downlink control signaling, and the CIF in the downlink control signaling is used for indicating that different power control mechanisms are employed when the different uplink signals are transmitted, and the CIF is used for indicating downlink pilot signals for measuring the path losses of the different uplink signals.

**24.** The method according to claim 19, wherein
the indication signaling further comprises path loss reference linking information, which is used for indicating a subset of downlink pilot signals for measuring the path losses of the different uplink signals in the configuration of the at least one downlink pilot signal, or used for jointly indicating the subset of the downlink pilot signals for measuring the path losses of the different uplink signals in the configuration of the at least one downlink pilot signal and a carrier on which it is.

**25.** A method for uplink power control, comprising:

generating (310), by an access point, a configuration of at least one downlink pilot signal;
transmitting (320), by the access point, the configuration of the at least one downlink pilot signal to a user equipment, so that the user equipment performs power control on different uplink signals by employing different uplink power control mechanisms respectively, wherein the different uplink power control mechanisms means that at least one parameter in each uplink power control formula is independently set,
wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises a closed-loop power adjustment amount, target receiving power of a Physical Uplink Shared Channel, or a path loss compensation factor, and the closed-loop power adjustment amount, the target receiving power of a Physical Uplink Shared Channel, or the path loss compensation factor is independently configured by the access point.

**26.** The method according to claim 25, wherein the configuration of the at least one downlink pilot signal comprises a configuration of CRS and a configuration of CSI-RS.

**27.** The method according to claim 25, wherein a power offset in a power control formula of at least one of the different uplink signals is independently set by the access point, and the method further comprises: transmitting at least three power offsets to the user equipment.

**28.** The method according to any one of claims 25-27, further comprising:

generating an indication signaling for indicating the user equipment to employ different power control mechanisms when the different uplink signals are transmitted;
transmitting the indication signaling to the user equipment.

**29.** The method according to claim 28, wherein,
the indication signaling is a precoding matrix indicator PMI disabling signaling.

**30.** A user equipment (700), comprising:

a power control module (710), used for performing power control on different uplink signals by employing different uplink power control mechanisms respectively to determine respective transmission powers of the different uplink signals, wherein the different uplink power control mechanisms means that at least one parameter in each uplink power control formula is independently set;
a transmitting module (720), used for transmitting the different uplink signals by using the determined transmission powers respectively,
wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises a closed-loop power adjustment amount, target receiving power of a Physical Uplink Shared Channel, or a path loss compensation factor, and the closed-loop power adjustment amount, the target receiving power of a Physical Uplink Shared Channel, or the path loss compensation factor is independently configured by an access point.

**31.** The user equipment (700) according to claim 30, wherein the power control module (710) receives a configuration of at least one downlink pilot signal from the access point, measures path losses of the different uplink signals based on the configuration of the at least one downlink pilot signal respectively, and compensates the transmission powers of the different uplink signals according to the measured path losses.

**32.** The user equipment (700) according to claim 30, wherein the transmitting module (720) transmits the different uplink signals by configuring the different uplink signals in subframes of different groups.

**33.** The user equipment (700) according to claim 30, wherein the transmitting module (720) transmits the different uplink signals by being configured in bands of different groups.

**34.** The user equipment (700) according to claim 30, wherein the transmitting module (720) transmits the different uplink signals by being configured in sequences of different groups.

**35.** The user equipment (700) according to claim 30, wherein the transmitting module (720) transmits the different uplink signals through different transmitting antenna ports.

**36.** The user equipment (700) according to any one of claims 30-32, wherein the different uplink signals comprise an acyclic SRS and a cyclic SRS, wherein the acyclic SRS is used for the access point, and the cyclic SRS is used for another access point.

**37.** The user equipment (700) according to any one of claims 30-32, further comprising:

a receiving module (730), used for receiving an indication signaling from the access point, wherein the indication signaling is used for indicating that different power control mechanisms are employed when the different uplink signals are transmitted, and the different uplink signals are used for different access points.

**38.** An access point (800), comprising:

a configuration module (810), used for generating a configuration of at least one downlink pilot signal;
a transmitting module (820), used for transmitting the configuration of the at least one downlink pilot signal to a user equipment, so that the user equipment performs power control on different uplink signals by employing different uplink power control mechanisms respectively, wherein the different uplink power control mechanisms means that at least one parameter in each uplink power control formula is independently set;
a setting module (830), used for independently setting a closed-loop power adjustment amount, target receiving power of a Physical Uplink Shared Channel, or a path loss compensation factor for at least one of the different uplink power control mechanisms, for at least one of the different uplink signals, wherein power control formulae of the different uplink power control mechanisms are the same, and at least one parameter in the power control formulae of the different uplink power control mechanisms is independently configured, so that corresponding power compensation is performed on the different uplink signals, the at least one parameter in the power control formulae comprises the closed-loop power adjustment amount, the target receiving power of a Physical Uplink Shared Channel, or the path loss compensation factor.

**39.** The access point (800) according to any one of claim 38, further comprising:

a generating module (840), used for generating an indication signaling, wherein the indication signaling is used for indicating that the user equipment employs the different power control mechanisms when the different uplink signals are transmitted, and the transmitting module is further used for transmitting the indication signaling to the user equipment.

**40.** The access point (800) according to any one of claim 38, wherein the access point (800) is a macro base station in a Coordinated Multi-Point transmission system.

**Patentansprüche**

**1.** Verfahren zur Leistungsregelung in der Aufwärtsstrecke, umfassend:

Ausführen (210), durch ein Benutzer-Equipment, der Leistungsregelung an verschiedenen Aufwärtsstreckensignalen durch Anwendung verschiedener jeweiliger Aufwärtsstrecken-Leistungsregelungsmechanismen zum Bestimmen jeweiliger Sendeleistungen der verschiedenen Aufwärtsstreckensignale, wobei die verschiedenen Aufwärtsstrecken-Leistungsregelungsmechanismen bedeuten, dass wenigstens ein Parameter in jeder Aufwärtsstrecken-Leistungsregelungsformel unabhängig eingestellt wird;
Senden (220), durch das Benutzer-Equipment, der verschiedenen Aufwärtsstreckensignale durch Verwendung der jeweils bestimmten Sendeleistungen,
wobei die Leistungsregelungsformeln der verschiedenen Aufwärtsstrecken-Leistungsregelungsmechanismen dieselben sind, und wobei wenigstens ein Parameter in den Leistungsregelungsformeln der verschiedenen Aufwärtsstrecken-Leistungsregelungsmechanismen unabhängig konfiguriert wird, so dass eine entsprechende Leistungskompensation an den verschiedenen Aufwärtsstreckensignalen ausgeführt wird, wobei der wenigstens eine Parameter in den Leistungsregelungsformeln umfasst: einen Leistungseinstellungsbetrag in einem geschlossenen Regelkreis, eine Zielempfangsleistung eines gemeinsam genutzten physischen Aufwärtsstreckenkanals (Physical Uplink Shared Channel) oder einen Pfadverlustkompensationsfaktor, und wobei der Leistungseinstellungsbetrag in einem geschlossenen Regelkreis, die Zielempfangsleistung eines gemeinsam genutzten physischen Aufwärtsstreckenkanals oder der Pfadverlustkompensationsfaktor durch einen Zugangspunkt unabhängig konfiguriert wird.

**2.** Verfahren gemäß Anspruch 1, wobei das Ausführen der Leistungsregelung an verschiedenen Aufwärtsstreckensignalen durch Anwendung verschiedener Aufwärtsstrecken-Leistungsregelungsmechanismen jeweils umfasst:

Empfangen einer Konfiguration wenigstens eines Abwärtsstreckenpilotsignals;
Messen von Pfadverlusten der verschiedenen Aufwärtsstreckensignale jeweils basierend auf der Konfiguration des wenigstens einen Abwärtsstreckenpilotsignals;
Kompensieren der Sendeleistungen der verschiedenen Aufwärtsstreckensignale gemäß den gemessenen Pfadverlusten.

**3.** Verfahren gemäß Anspruch 2, wobei das Messen von Pfadverlusten der verschiedenen Aufwärtsstreckensignale basierend auf der Konfiguration des wenigstens einen Abwärtsstreckenpilotsignals jeweils umfasst:

Messen der Pfadverluste der verschiedenen Aufwärtsstreckensignale basierend auf einer Konfiguration eines gemeinsamen Referenzsignals CRS (Common Reference Signal) bzw. einer Konfiguration eines Kanalzustandsinformation-Referenzsignals CSI-RS (Channel State Information-Reference Signal).

**4.** Verfahren gemäß Anspruch 2, wobei das Messen von Pfadverlusten der verschiedenen Aufwärtsstreckensignale basierend auf der Konfiguration des wenigstens einen Abwärtsstreckenpilotsignals jeweils umfasst:

Messen der Pfadverluste der verschiedenen Aufwärtsstreckensignale basierend auf einem ersten Konfigurationssatz von CSI-RS bzw. einem zweiten Konfigurationssatz von CSI-RS, wobei der erste Konfigurationssatz von CSI-RS und der zweite Konfigurationssatz von CSI-RS jeweils wenigstens ein CSI-RS-Muster umfassen.

5. Verfahren gemäß Anspruch 2, wobei das Messen von Pfadverlusten der verschiedenen Aufwärtsstreckensignale basierend auf der Konfiguration des wenigstens einen Abwärtsstreckenpilotsignals jeweils umfasst:

Messen der Pfadverluste der verschiedenen Aufwärtsstreckensignale basierend auf einem gleichen Konfigurationssatz von CSI-RS jeweils unter Verwendung verschiedener Funktionen, wobei die Funktionen eine Sendeleistung und eine Referenzsignalempfangsleistung RSRP (Reference Signal Receiving Power) eines CSI-RS in dem Konfigurationssatz von CSI-RS sind.

6. Verfahren gemäß einem der Ansprüche 1-5, wobei die verschiedenen Aufwärtsstreckensignale gesendet werden, indem sie in Teilrahmen verschiedener Gruppen konfiguriert werden.

7. Verfahren gemäß einem der Ansprüche 1-5, wobei die verschiedenen Aufwärtsstreckensignale gesendet werden, indem sie in Bändern verschiedener Gruppen konfiguriert werden.

8. Verfahren gemäß einem der Ansprüche 1-5, wobei die verschiedenen Aufwärtsstreckensignale gesendet werden, indem sie in Sequenzen verschiedener Gruppen konfiguriert werden.

9. Verfahren gemäß einem der Ansprüche 1-5, wobei die verschiedenen Aufwärtsstreckensignale über verschiedene Sendeantennenports gesendet werden.

10. Verfahren gemäß einem der Ansprüche 6-9, wobei die verschiedenen Aufwärtsstreckensignale verschiedene zyklische Sondierungsreferenzsignale SRS (Sounding Reference Signals) umfassen.

11. Verfahren gemäß einem der Ansprüche 6-9, wobei die verschiedenen Aufwärtsstreckensignale verschiedene azyklische SRS umfassen.

12. Verfahren gemäß den Ansprüchen 6-9, wobei die verschiedenen Aufwärtsstreckensignale ein zyklisches SRS und ein azyklisches SRS umfassen.

13. Verfahren gemäß einem der Ansprüche 1-5, wobei ein Leistungs-"Offset" in einer Leistungsregelungsformel wenigstens eines der verschiedenen Aufwärtsstreckensignale durch einen Zugangspunkt unabhängig eingestellt wird, wobei Leistungs-"Offsets" eines zyklischen SRS und eines azyklischen SRS bei Anwendung eines ersten Leistungsregelungsmechanismus ein erstes Leistungs-"Offset" bzw. ein zweites Leistungs-"Offset" sind und wobei Leistungs-"Offsets" eines zyklischen SRS und eines azyklischen SRS bei Anwendung eines zweiten Leistungsregelungsmechanismus ein drittes Leistungs-"Offset" bzw. ein viertes Leistungs-"Offset" sind, wobei das dritte Leistungs-"Offset" und das vierte Leistungs-"Offset" gleich oder verschieden sind und wobei die Wertebereiche des dritten Leistungs-"Offsets" und des vierten Leistungs-"Offsets" von den Wertebereichen des ersten Leistungs-"Offsets" und des zweiten Leistungs-"Offsets" verschieden sind.

14. Verfahren gemäß einem der Ansprüche 1-5, wobei die verschiedenen Aufwärtsstreckensignale ein Demodulationsreferenzsignal DMRS (Demodulation Reference Signal) und ein SRS umfassen.

15. Verfahren gemäß Anspruch 14, wobei das DMRS und das SRS getrennt voneinander in verschiedenen Teilrahmen gesendet werden, wobei die verschiedenen Teilrahmen Daten enthalten oder nicht.

16. Verfahren gemäß Anspruch 14, wobei das DMRS und das SRS in demselben Teilrahmen gesendet werden, wobei derselbe Teilrahmen Daten enthält oder nicht.

17. Verfahren gemäß einem der Ansprüche 1-5, wobei die verschiedenen Aufwärtsstreckensignale ein azyklisches SRS und ein zyklisches SRS umfassen, wobei das azyklische SRS für einen Zugangspunkt verwendet wird und das zyklische SRS für einen anderen Zugangspunkt verwendet wird.

**18.** Verfahren gemäß einem der Ansprüche 1-5, wobei die verschiedenen Aufwärtsstreckensignale ein SRS, das durch ein Abwärtsstreckenkanalinformation (Downlink Channel Information, DCI) - Format für die Aufwärtsstreckenzeitplanung ausgelöst wird, und ein SRS, das durch ein DCI-Format für die Abwärtsstreckenzeitplanung ausgelöst wird, umfassen.

**19.** Verfahren gemäß einem der Ansprüche 1-5, ferner umfassend:

Empfangen einer Anzeigesignalisierung vom Zugangspunkt, wobei die Anzeigesignalisierung dazu verwendet wird, anzuzeigen, dass verschiedene Leistungsregelungsmechanismen angewandt werden, wenn die verschiedenen Aufwärtsstreckensignale gesendet werden, und dass die verschiedenen Aufwärtsstreckensignale für verschiedene Zugangspunkte verwendet werden.

**20.** Verfahren gemäß Anspruch 19, wobei
die Anzeigesignalisierung eine den Vorcodierungsmatrixanzeiger PMI (Precoding Matrix Indicator) deaktivierende Signalisierung ist.

**21.** Verfahren gemäß Anspruch 19, wobei
die Anzeigesignalisierung ferner verwendet wird, um Parameter anzuzeigen, die von der Leistungsregelungsformel der verschiedenen Leistungsregelungsmechanismen angewandt werden.

**22.** Verfahren gemäß Anspruch 19, wobei
die Anzeigesignalisierung eine Abwärtsstreckensteuersignalisierung ist, und wobei ein Trägerindikatorfeld CIF (Carrier Indicator Field) in der Abwärtsstreckensteuersignalisierung verwendet wird, um anzuzeigen, dass die verschiedenen Leistungsregelungsmechanismen angewandt werden, wenn die verschiedenen Aufwärtsstreckensignale gesendet werden.

**23.** Verfahren gemäß Anspruch 19, wobei
die Anzeigesignalisierung eine Abwärtsstreckensteuersignalisierung ist, und wobei das CIF in der Abwärtsstreckensteuersignalisierung verwendet wird, um anzuzeigen, dass verschiedene Leistungsregelungsmechanismen angewandt werden, wenn die verschiedenen Aufwärtsstreckensignale gesendet werden, und wobei das CIF verwendet wird, um Abwärtsstreckenpilotsignale zum Messen der Pfadverluste der verschiedenen Aufwärtsstreckensignale anzuzeigen.

**24.** Verfahren gemäß Anspruch 19, wobei
die Anzeigesignalisierung ferner eine Pfadverlust-Referenzverbindungsinformation umfasst, die verwendet wird, um eine Teilmenge von Abwärtsstreckenpilotsignalen zum Messen der Pfadverluste der verschiedenen Aufwärtsstreckensignale in der Konfiguration des wenigstens einen Abwärtsstreckenpilotsignals anzuzeigen, oder verwendet wird, um die Teilmenge der Abwärtsstreckenpilotsignale zum Messen der Pfadverluste der verschiedenen Aufwärtsstreckensignale in der Konfiguration des wenigstens einen Abwärtsstreckenpilotsignals und einen Träger, auf der sie sich befindet, anzuzeigen.

**25.** Verfahren zur Leistungsregelung in der Aufwärtsstrecke, umfassend:

Erzeugen (310), durch einen Zugangspunkt, einer Konfiguration wenigstens eines Abwärtsstreckenpilotsignals;
Senden (320), durch den Zugangspunkt, der Konfiguration des wenigstens einen Abwärtsstreckenpilotsignals an ein Benutzer-Equipment, so dass das Benutzer-Equipment eine Leistungsregelung an verschiedenen Aufwärtsstreckensignalen durch Anwendung jeweils verschiedener Aufwärtsstrecken-Leistungsregelungsmechanismen ausführt, wobei die verschiedenen Aufwärtsstrecken-Leistungsregelungsmechanismen bedeuten, dass wenigstens ein Parameter in jeder Aufwärtsstrecken-Leistungsregelungsformel unabhängig eingestellt wird, wobei die Leistungsregelungsformeln der verschiedenen Aufwärtsstrecken-Leistungsregelungsmechanismen dieselben sind, und wobei wenigstens ein Parameter in den Leistungsregelungsformeln der verschiedenen Aufwärtsstrecken-Leistungsregelungsmechanismen unabhängig konfiguriert wird, so dass eine entsprechende Leistungskompensation an den verschiedenen Aufwärtsstreckensignalen ausgeführt wird, wobei der wenigstens eine Parameter in den Leistungsregelungsformeln umfasst: einen Leistungseinstellungsbetrag in einem geschlossenen Regelkreis, eine Zielempfangsleistung eines gemeinsam genutzten physischen Aufwärtsstreckenkanals (Physical Uplink Shared Channel) oder einen Pfadverlustkompensationsfaktor, und wobei der Leistungseinstellungsbetrag in einem geschlossenen Regelkreis, die Zielempfangsleistung eines gemeinsam genutzten physischen Aufwärtsstreckenkanals oder der Pfadverlustkompensationsfaktor durch den Zugangspunkt unabhängig konfiguriert wird.

26. Verfahren gemäß Anspruch 25, wobei die Konfiguration des wenigstens einen Abwärtsstreckenpilotsignals eine CRS-Konfiguration und eine CSI-RS-Konfiguration umfasst.

27. Verfahren gemäß Anspruch 25, wobei ein Leistungs-"Offset" in einer Leistungsregelungsformel von wenigstens einem der verschiedenen Aufwärtsstreckensignale durch den Zugangspunkt unabhängig eingestellt wird, und wobei das Verfahren ferner umfasst: Senden von wenigstens drei Leistungs-"Offsets" an das Benutzer-Equipment.

28. Verfahren nach einem der Ansprüche 25-27, ferner umfassend:

Erzeugen einer Anzeigesignalisierung, um dem Benutzer-Equipment anzuzeigen, die verschiedenen Leistungsregelungsmechanismen anzuwenden, wenn die verschiedenen Aufwärtsstreckensignale gesendet werden; Senden der Anzeigesignalisierung an das Benutzer-Equipment.

29. Verfahren gemäß Anspruch 28, wobei
die Anzeigesignalisierung eine den Vorcodierungsmatrixanzeiger PMI (Precoding Matrix Indicator) deaktivierende Signalisierung ist.

30. Benutzer-Equipment (700), umfassend:

ein Leistungsregelungsmodul (710), das zum Ausführen einer Leistungsregelung an verschiedenen Aufwärtsstreckensignalen durch Anwendung verschiedener jeweiliger Aufwärtsstrecken-Leistungsregelungsmechanismen zum Bestimmen jeweiliger Sendeleistungen der verschiedenen Aufwärtsstreckensignale verwendet wird, wobei die verschiedenen Aufwärtsstrecken-Leistungsregelungsmechanismen bedeuten, dass wenigstens ein Parameter in jeder Aufwärtsstrecken-Leistungsregelungsformel unabhängig eingestellt wird;
ein Sendemodul (720), das zum Senden der verschiedenen Aufwärtsstreckensignale durch Verwendung der jeweils bestimmten Sendeleistungen verwendet wird,
wobei die Leistungsregelungsformeln der verschiedenen Aufwärtsstrecken-Leistungsregelungsmechanismen dieselben sind, und wobei wenigstens ein Parameter in den Leistungsregelungsformeln der verschiedenen Aufwärtsstrecken-Leistungsregelungsmechanismen unabhängig konfiguriert wird, so dass eine entsprechende Leistungskompensation an den verschiedenen Aufwärtsstreckensignalen ausgeführt wird, wobei der wenigstens eine Parameter in den Leistungsregelungsformeln umfasst: einen Leistungseinstellungsbetrag in einem geschlossenen Regelkreis, eine Zielempfangsleistung eines gemeinsam genutzten physischen Aufwärtsstreckenkanals (Physical Uplink Shared Channel) oder einen Pfadverlustkompensationsfaktor, und wobei der Leistungseinstellungsbetrag in einem geschlossenen Regelkreis, die Zielempfangsleistung eines gemeinsam genutzten physischen Aufwärtsstreckenkanals oder der Pfadverlustkompensationsfaktor durch einen Zugangspunkt unabhängig konfiguriert wird.

31. Benutzer-Equipment (700) gemäß Anspruch 30, wobei das Leistungsregelungsmodul (710) eine Konfiguration von wenigstens einem Abwärtsstreckenpilotsignal vom Zugangspunkt empfängt, die Pfadverluste der verschiedenen Aufwärtsstreckensignale jeweils basierend auf der Konfiguration des wenigstens einen Abwärtsstreckenpilotsignals misst und die Sendeleistungen der verschiedenen Aufwärtsstreckensignale gemäß den gemessenen Pfadverlusten kompensiert.

32. Benutzer-Equipment (700) gemäß Anspruch 30, wobei das Sendemodul (720) die verschiedenen Aufwärtsstreckensignale sendet, indem die verschiedenen Aufwärtsstreckensignale in Teilrahmen verschiedener Gruppen konfiguriert werden.

33. Benutzer-Equipment (700) gemäß Anspruch 30, wobei das Sendemodul (720) die verschiedenen Aufwärtsstreckensignale sendet, indem sie in Bändern verschiedener Gruppen konfiguriert werden.

34. Benutzer-Equipment (700) gemäß Anspruch 30, wobei das Sendemodul (720) die verschiedenen Aufwärtsstreckensignale sendet, indem sie in Sequenzen verschiedener Gruppen konfiguriert werden.

35. Benutzer-Equipment (700) gemäß Anspruch 30, wobei das Sendemodul (720) die verschiedenen Aufwärtsstreckensignale über verschiedene Sendeantennenports sendet.

**36.** Benutzer-Equipment (700) gemäß einem der Ansprüche 30-32, wobei die verschiedenen Aufwärtsstreckensignale ein azyklisches SRS und ein zyklisches SRS umfassen, wobei das azyklische SRS für den Zugangspunkt verwendet wird und das zyklische SRS für einen anderen Zugangspunkt verwendet wird.

**37.** Benutzer-Equipment (700) nach einem der Ansprüche 30-32, ferner umfassend:

ein Empfangsmodul (730), das zum Empfangen einer Anzeigesignalisierung vom Zugangspunkt verwendet wird, wobei die Anzeigesignalisierung dazu verwendet wird, anzuzeigen, dass verschiedene Leistungsregelungsmechanismen angewandt werden, wenn die verschiedenen Aufwärtsstreckensignale gesendet werden, und dass die verschiedenen Aufwärtsstreckensignale für verschiedene Zugangspunkte verwendet werden.

**38.** Zugangspunkt (800), umfassend:

ein Konfigurationsmodul (810), das zum Erzeugen einer Konfiguration wenigstens eines Abwärtsstreckenpilotsignals verwendet wird;
ein Sendemodul (820), das zum Senden der Konfiguration des wenigstens einen Abwärtsstreckenpilotsignals an ein Benutzer-Equipment verwendet wird, so dass das Benutzer-Equipment eine Leistungsregelung an verschiedenen Aufwärtsstreckensignalen durch Anwendung jeweils verschiedener Aufwärtsstrecken-Leistungsregelungsmechanismen ausführt, wobei die verschiedenen Aufwärtsstrecken-Leistungsregelungsmechanismen bedeuten, dass wenigstens ein Parameter in jeder Aufwärtsstrecken-Leistungsregelungsformel unabhängig eingestellt wird;
ein Einstellmodul (830), das verwendet wird, um einen Leistungseinstellungsbetrag in einem geschlossenen Regelkreis, eine Zielempfangsleistung eines gemeinsam genutzten physischen Aufwärtsstreckenkanals (Physical Uplink Shared Channel) oder einen Pfadverlustkompensationsfaktor für wenigstens einen der verschiedenen Aufwärtsstrecken-Leistungsregelungsmechanismen für wenigstens eines der verschiedenen Aufwärtsstreckensignale einzustellen, wobei die Leistungsregelungsformeln der verschiedenen Aufwärtsstrecken-Leistungsregelungsmechanismen dieselben sind, und wobei wenigstens ein Parameter in der Leistungsregelungsformel der verschiedenen Aufwärtsstrecken-Leistungsregelungsmechanismen unabhängig konfiguriert wird, so dass eine entsprechende Leistungskompensation an den verschiedenen Aufwärtsstreckensignalen ausgeführt wird, wobei der wenigstens eine Parameter in den Leistungsregelungsformeln umfasst: den Leistungseinstellungsbetrag in einem geschlossenen Regelkreis, die Zielempfangsleistung eines gemeinsam genutzten physischen Aufwärtsstreckenkanals oder den Pfadverlustkompensationsfaktor.

**39.** Zugangspunkt (800) gemäß einem des Anspruchs 38, ferner umfassend:

ein Erzeugungsmodul (840), das zum Erzeugen einer Anzeigesignalisierung verwendet wird, wobei die Anzeigesignalisierung dazu verwendet wird, anzuzeigen, dass das Benutzer-Equipment die verschiedenen Leistungsregelungsmechanismen anwendet, wenn die verschiedenen Aufwärtsstreckensignale gesendet werden, und wobei das Sendemodul ferner verwendet wird, um die Anzeigesignalisierung an das Benutzer-Equipment zu senden.

**40.** Zugangspunkt (800) gemäß einem des Anspruchs 38, wobei der Zugangspunkt (800) eine Makrobasisstation in einem koordinierten Mehrpunkt (Coordinated Multi-Point)- Übertragungssystem ist.

**Revendications**

**1.** Procédé de commande de puissance de liaison montante, comprenant :

l'exécution (210), par un équipement utilisateur, d'une commande de puissance sur différents signaux de liaison montante en utilisant différents mécanismes de commande de puissance de liaison montante respectivement pour déterminer des puissances de transmission respectives des différents signaux de liaison montante, dans lequel les différents mécanismes de commande de puissance de liaison montante signifient qu'au moins un paramètre dans chaque formule de commande de puissance de liaison montante est réglé indépendamment ;
la transmission (220), par l'équipement utilisateur, des différents signaux de liaison montante en utilisant les puissances de transmission déterminées, respectivement, dans lequel les formules de commande de puissance des différents mécanismes de commande de puissance de liaison montante sont identiques, et au moins un paramètre dans les formules de commande de puissance des différents mécanismes de commande de puissance de liaison montante est configuré indépendamment, de telle sorte qu'une compensation de puissance correspondante soit exécutée sur les différents signaux de liaison montante, l'au moins un paramètre dans les formules de commande de puissance comprend une quantité d'ajustement de puissance en boucle fermée, une puissance de réception cible d'un canal partagé de liaison montante physique, ou un facteur de compensation de perte de chemin, et la quantité d'ajustement de puissance en boucle fermée, la puissance de réception cible d'un canal partagé de liaison montante physique, ou le facteur de compensation de perte de chemin est configuré(e) indépendamment par un point d'accès.

2. Procédé selon la revendication 1, dans lequel l'exécution de la commande de puissance sur différents signaux de liaison montante en employant différents mécanismes de commande de puissance de liaison montante respectivement comprend :

la réception d'une configuration d'au moins un signal pilote de liaison descendante ;
la mesure de pertes de chemin des différents signaux de liaison montante en fonction de la configuration de l'au moins un signal pilote de liaison descendante respectivement ;
la compensation des puissances de transmission des différents signaux de liaison montante en fonction des pertes de chemin mesurées.

3. Procédé selon la revendication 2, dans lequel la mesure des pertes de chemin des différents signaux de liaison montante en fonction de la configuration de l'au moins un signal pilote de liaison descendante respectivement comprend :

la mesure des pertes de chemin des différents signaux de liaison montante en fonction d'une configuration d'un signal de référence commun CRS et d'une configuration d'un signal d'information d'état de canal-de référence, CSI-RS, respectivement.

4. Procédé selon la revendication 2, dans lequel la mesure des pertes de chemin des différents signaux de liaison montante en fonction de la configuration de l'au moins un signal pilote de liaison descendante respectivement comprend :

la mesure des pertes de chemin des différents signaux de liaison montante en fonction d'un premier ensemble de configurations de signaux CSI-RS et d'un second ensemble de configurations de signaux CSI-RS respectivement, dans lequel chacun du premier ensemble de configurations de signaux CSI-RS et du second ensemble de configurations de signaux CSI-RS comprend au moins une configuration CSI-RS.

5. Procédé selon la revendication 2, dans lequel la mesure des pertes de chemin des différents signaux de liaison montante en fonction de la configuration de l'au moins un signal pilote de liaison descendante respectivement comprend :

la mesure des pertes de chemin des différents signaux de liaison montante en fonction d'un même ensemble de configurations de signaux CSI-RS en utilisant différentes fonctions respectivement, dans lequel les fonctions sont celles d'une puissance de transmission et d'une puissance de réception de signal de référence RSRP d'un signal CSI-RS dans l'ensemble de configurations de signaux CSI-RS.

6. Procédé selon l'une quelconque des revendications 1 à 5, dans lequel les différents signaux de liaison montante sont transmis en étant configurés dans des sous-trames de différents groupes.

7. Procédé selon l'une quelconque des revendications 1 à 5, dans lequel les différents signaux de liaison montante sont transmis en étant configurés dans des bandes de différents groupes.

8. Procédé selon l'une quelconque des revendications 1 à 5, dans lequel les différents signaux de liaison montante sont transmis en étant configurés dans des séquences de différents groupes.

9. Procédé selon l'une quelconque des revendications 1 à 5, dans lequel les différents signaux de liaison montante sont transmis par le biais de différents ports d'antenne d'émission.

10. Procédé selon l'une quelconque des revendications 6 à 9, dans lequel les différents signaux de liaison montante comprennent différents signaux de référence de sondage (SRS) cycliques.

**11.** Procédé selon l'une quelconque des revendications 6 à 9, dans lequel les différents signaux de liaison montante comprennent différents signaux SRS acycliques.

**12.** Procédé selon les revendications 6 à 9, dans lequel les différents signaux de liaison montante comprennent un signal SRS cyclique et un signal SRS acyclique.

**13.** Procédé selon l'une quelconque des revendications 1 à 5, dans lequel un décalage de puissance dans une formule de commande de puissance d'au moins l'un des différents signaux de liaison montante est réglé indépendamment par un point d'accès, dans lequel les décalages de puissance d'un signal SRS cyclique et d'un signal SRS acyclique employant un premier mécanisme de commande de puissance sont un premier décalage de puissance et un deuxième décalage de puissance respectivement, et les décalages de puissance d'un signal SRS cyclique et d'un signal SRS acyclique employant un second mécanisme de commande de puissance sont un troisième décalage de puissance et un quatrième décalage de puissance respectivement, dans lequel le troisième décalage de puissance et le quatrième décalage de puissance sont identiques ou différents, et des plages de valeurs du troisième décalage de puissance et du quatrième décalage de puissance sont différentes de plages de valeurs du premier décalage de puissance et du deuxième décalage de puissance.

**14.** Procédé selon l'une quelconque des revendications 1 à 5, dans lequel les différents signaux de liaison montante comprennent un signal de référence de démodulation DMRS et un signal SRS.

**15.** Procédé selon la revendication 14, dans lequel le signal DMRS et le signal SRS sont transmis séparément dans des sous-trames différentes, les différentes sous-trames comportant ou non des données.

**16.** Procédé selon la revendication 14, dans lequel le signal DMRS et le signal SRS sont transmis dans la même sous-trame, la même sous-trame comportant ou non des données.

**17.** Procédé selon l'une quelconque des revendications 1 à 5, dans lequel les différents signaux de liaison montante comprennent un signal SRS acyclique et un signal SRS cyclique, le signal SRS acyclique étant utilisé pour un point d'accès, et le signal SRS cyclique étant utilisé pour un autre point d'accès.

**18.** Procédé selon l'une quelconque des revendications 1 à 5, dans lequel les différents signaux de liaison montante comprennent un signal SRS déclenché par un format d'information de canal de liaison descendante DCI pour l'ordonnancement de liaison montante et un signal SRS déclenché par un format DCI pour l'ordonnancement de liaison descendante.

**19.** Procédé selon l'une quelconque des revendications 1 à 5, comprenant en outre :

la réception d'une signalisation d'indication depuis le point d'accès, la signalisation d'indication servant à indiquer que différents mécanismes de commande de puissance sont employés quand les différents signaux de liaison montante sont transmis, et les différents signaux de liaison montante sont utilisés pour différents points d'accès.

**20.** Procédé selon la revendication 19, dans lequel la signalisation d'indication est une signalisation de désactivation d'indicateur de matrice de précodage PMI.

**21.** Procédé selon la revendication 19, dans lequel la signalisation d'indication sert en outre à indiquer des paramètres employés par les formules de commande de puissance des différents mécanismes de commande de puissance.

**22.** Procédé selon la revendication 19, dans lequel la signalisation d'indication est une signalisation de commande de liaison descendante, et un champ d'indicateur de porteuse (CIF) dans la signalisation de commande de liaison descendante est utilisé pour indiquer que les différents mécanismes de commande de puissance sont employés quand les différents signaux de liaison montante sont transmis.

**23.** Procédé selon la revendication 19, dans lequel la signalisation d'indication est une signalisation de commande de liaison descendante, et le champ CIF dans la signalisation de commande de liaison descendante est utilisé pour indiquer que différents mécanismes de commande de puissance sont employés quand les différents signaux de liaison montante sont transmis, et le champ CIF est utilisé pour indiquer des signaux pilotes de liaison descendante pour mesurer les pertes de chemin des différents signaux de liaison montante.

24. Procédé selon la revendication 19, dans lequel
la signalisation d'indication comprend en outre une information de liaison de référence de perte de chemin, laquelle est utilisée pour indiquer un sous-ensemble de signaux pilotes de liaison descendante pour mesurer les pertes de chemin des différents signaux de liaison montante dans la configuration de l'au moins un signal pilote de liaison descendante, ou utilisée pour indiquer conjointement le sous-ensemble des signaux pilotes de liaison descendante pour mesurer les pertes de chemin des différents signaux de liaison montante dans la configuration de l'au moins un signal pilote de liaison descendante et d'une porteuse sur laquelle il se trouve.

25. Procédé de commande de puissance de liaison montante, comprenant :

la génération (310), par un point d'accès, d'une configuration d'au moins un signal pilote de liaison descendante ;
la transmission (320), par le point d'accès, de la configuration de l'au moins un signal pilote de liaison descendante à un équipement utilisateur, de telle sorte que l'équipement utilisateur effectue une commande de puissance sur différents signaux de liaison montante en employant différents mécanismes de commande de puissance de liaison montante respectivement, dans lequel les différents mécanismes de commande de puissance de liaison montante signifient qu'au moins un paramètre dans chaque formule de commande de puissance de liaison montante est réglé indépendamment,
dans lequel les formules de commande de puissance des différents mécanismes de commande de puissance de liaison montante sont identiques, et au moins un paramètre dans les formules de commande de puissance des différents mécanismes de commande de puissance de liaison montante est configuré indépendamment, de telle sorte qu'une compensation de puissance correspondante soit exécutée sur les différents signaux de liaison montante, l'au moins un paramètre dans les formules de commande de puissance comprend une quantité d'ajustement de puissance en boucle fermée, une puissance de réception cible d'un canal partagé de liaison montante physique, ou un facteur de compensation de perte de chemin, et la quantité d'ajustement de puissance en boucle fermée, la puissance de réception cible d'un canal partagé de liaison montante physique, ou le facteur de compensation de perte de chemin est configuré(e) indépendamment par le point d'accès.

26. Procédé selon la revendication 25, dans lequel la configuration de l'au moins un signal pilote de liaison descendante comprend une configuration d'un signal CRS et une configuration d'un signal CSI-RS.

27. Procédé selon la revendication 25, dans lequel un décalage de puissance dans une formule de commande de puissance d'au moins l'un des différents signaux de liaison montante est réglé indépendamment par le point d'accès, et le procédé comprend en outre : la transmission d'au moins trois décalages de puissance à l'équipement utilisateur.

28. Procédé selon l'une quelconque des revendications 25 à 27, comprenant en outre :

la génération d'une signalisation d'indication pour indiquer à l'équipement utilisateur d'employer différents mécanismes de commande de puissance quand les différents signaux de liaison montante sont transmis ;
la transmission de la signalisation d'indication à l'équipement utilisateur.

29. Procédé selon la revendication 28, dans lequel,
la signalisation d'indication est une signalisation de désactivation d'indicateur de matrice de précodage PMI.

30. Équipement utilisateur (700), comprenant :

un module de commande de puissance (710), servant à exécuter une commande de puissance sur différents signaux de liaison montante en employant différents mécanismes de commande de puissance de liaison montante respectivement pour déterminer des puissances de transmission respectives des différents signaux de liaison montante, dans lequel les différents mécanismes de commande de puissance de liaison montante signifient qu'au moins un paramètre dans chaque formule de commande de puissance de liaison montante est réglé indépendamment ;
un module de transmission (720), servant à transmettre les différents signaux de liaison montante en utilisant les puissances de transmission déterminées, respectivement,
dans lequel les formules de commande de puissance des différents mécanismes de commande de puissance de liaison montante sont identiques, et au moins un paramètre dans les formules de commande de puissance des différents mécanismes de commande de puissance de liaison montante est configuré indépendamment, de telle sorte qu'une compensation de puissance correspondante soit exécutée sur les différents signaux de liaison montante, l'au moins un paramètre dans les formules de commande de puissance comprend une quantité d'ajustement de puissance en boucle fermée, une puissance de réception cible d'un canal partagé de liaison montante physique, ou un facteur de compensation de perte de chemin, et la quantité d'ajustement de puissance en boucle fermée, la puissance de réception cible d'un canal partagé de liaison montante physique, ou le facteur de compensation de perte de chemin est configuré indépendamment par un point d'accès.

31. Équipement utilisateur (700) selon la revendication 30, dans lequel le module de commande de puissance (710) reçoit une configuration d'au moins un signal pilote de liaison descendante depuis le point d'accès, mesure les pertes de chemin des différents signaux de liaison montante en fonction de la configuration de l'au moins un signal pilote de liaison descendante respectivement, et compense les puissances de transmission des différents signaux de liaison montante en fonction des pertes de chemin mesurées.

32. Équipement utilisateur (700) selon la revendication 30, dans lequel le module de transmission (720) transmet les différents signaux de liaison montante en configurant les différents signaux de liaison montante dans des sous-trames de différents groupes.

33. Équipement utilisateur (700) selon la revendication 30, dans lequel le module de transmission (720) transmet les différents signaux de liaison montante en étant configurés dans des bandes de différents groupes.

34. Équipement utilisateur (700) selon la revendication 30, dans lequel le module de transmission (720) transmet les différents signaux de liaison montante en étant configurés dans des séquences de différents groupes.

35. Équipement utilisateur (700) selon la revendication 30, dans lequel le module de transmission (720) transmet les différents signaux de liaison montante par le biais de différents ports d'antenne de transmission.

36. Équipement utilisateur (700) selon l'une quelconque des revendications 30 à 32, dans lequel les différents signaux de liaison montante comprennent un signal SRS acyclique et un signal SRS cyclique, le signal SRS acyclique étant utilisé pour le point d'accès, et le signal SRS cyclique étant utilisé pour un autre point d'accès.

37. Équipement utilisateur (700) selon l'une quelconque des revendications 30 à 32, comprenant en outre :

un module de réception (730), servant à recevoir une signalisation d'indication depuis le point d'accès, la signalisation d'indication servant à indiquer que différents mécanismes de commande de puissance sont employés quand les différents signaux de liaison montante sont transmis, et les différents signaux de liaison montante sont utilisés pour différents points d'accès.

38. Point d'accès (800), comprenant :

un module de configuration (810), servant à générer une configuration d'au moins un signal pilote de liaison descendante ;
un module de transmission (820), servant à transmettre la configuration de l'au moins un signal pilote de liaison descendante à un équipement utilisateur, de telle sorte que l'équipement utilisateur effectue une commande de puissance sur différents signaux de liaison montante en employant différents mécanismes de commande de puissance de liaison montante respectivement, dans lequel les différents mécanismes de commande de puissance de liaison montante signifient qu'au moins un paramètre dans chaque formule de commande de puissance de liaison montante est réglé indépendamment,
un module de réglage (830), servant à régler indépendamment une quantité d'ajustement de puissance en boucle fermée, une puissance de réception cible d'un canal partagé de liaison montante physique, ou un facteur de compensation de perte de chemin pour au moins l'un des différents mécanismes de commande de puissance de liaison montante, pour au moins l'un des différents signaux de liaison montante, dans lequel des formules de commande de puissance des différents mécanismes de commande de puissance de liaison montante sont identiques, et au moins un paramètre dans les formules de commande de puissance des différents mécanismes de commande de puissance de liaison montante est configuré indépendamment, de telle sorte qu'une compensation de puissance correspondante soit exécutée sur les différents signaux de liaison montante, l'au moins un paramètre dans les formules de commande de puissance comprend la quantité de réglage de puissance en boucle fermée, la puissance de réception cible d'un canal partagé de liaison montante physique, ou le facteur de compensation de perte de chemin.

**39.** Point d'accès (800) selon l'une des revendication 38, comprenant en outre :

un module de génération (840), servant à générer une signalisation d'indication, la signalisation d'indication servant à indiquer que l'équipement utilisateur emploie les différents mécanismes de commande de puissance quand les différents signaux de liaison montante sont transmis, et le module de transmission sert en outre à transmettre la signalisation d'indication à l'équipement utilisateur.

**40.** Point d'accès (800) selon l'une des revendication 38, le point d'accès (800) étant une macrostation de base dans un système de transmission à points multiples coordonnés.

DL link
UL link
DL/UL reciprocity

CSI RS

CSI RS

Fig. 1

performing power control on different uplink signals by employing different uplink power control mechanisms respectively to determine respective transmission powers of the different uplink signals 210

transmitting the different uplink signals by using the determined transmission powers respectively 220

Fig.2

generating a configuration of at least one downlink pilot signal  —310

transmitting the configuration of the at least one downlink pilot signal to a user equipment, so that the user equipment performs power control on different uplink signals by employing different uplink power control mechanisms respectively  —320

Fig.3

an access point transmits an indication signaling to a UE  —410

the access point transmits configurations of different downlink pilot signals to the UE  —420

the UE employs different uplink power control mechanisms to determine the transmission powers of respective different uplink pilot signals when performing power control on the different uplink pilot signals according to the indication signaling  —430

the UE transmits the uplink pilot signals by using the determined transmission powers  —440

the access point performs channel measurement according to the received uplink pilot signals  —450

Fig.4

Fig.5

Fig.6

Fig.7

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010129610 A2